(19) 

Europäisches Patentamt
European Patent Office
Office européen des brevets

(11) **EP 4 664 155 A1**

(12) **EUROPEAN PATENT APPLICATION**
published in accordance with Art. 153(4) EPC

(43) Date of publication:
**17.12.2025  Bulletin 2025/51**

(21) Application number: **24769880.6**

(22) Date of filing: **08.03.2024**

(51) International Patent Classification (IPC):
**G01S 13/06** (2006.01)      **H04B 1/711** (2011.01)

(52) Cooperative Patent Classification (CPC):
**G01S 13/06; H04B 1/711; H04B 1/717;**
**H04B 1/7183; H04B 1/719**

(86) International application number:
**PCT/CN2024/080811**

(87) International publication number:
**WO 2024/188187 (19.09.2024 Gazette 2024/38)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **10.03.2023   CN 202310260811**

(71) Applicant: **Huawei Technologies Co., Ltd.**
**Shenzhen, Guangdong 518129 (CN)**

(72) Inventors:
• **LIU, Chenchen**
  **Shenzhen, Guangdong 518129 (CN)**

• **ZHOU, Zhengchun**
  **Chengdu, Sichuan 611756 (CN)**
• **QIAN, Bin**
  **Shenzhen, Guangdong 518129 (CN)**
• **HUANG, Lei**
  **Shenzhen, Guangdong 518129 (CN)**
• **YANG, Yang**
  **Chengdu, Sichuan 611756 (CN)**

(74) Representative: **Pfenning, Meinig & Partner mbB**
**Patent- und Rechtsanwälte**
**Theresienhöhe 11a**
**80339 München (DE)**

(54) **UWB-BASED PPDU TRANSMISSION METHOD AND APPARATUS**

(57)     This application relates to a UWB-based PPDU transmission method and an apparatus. The method includes: Two communication parties exchange a PPDU. The PPDU includes a first sequence. The first sequence is a ternary perfect sequence, and a periodic cross-correlation function of the first sequence and a second sequence belonging to a same sequence pair has a maximum of three different values. According to embodiments of this application, interference between devices can be reduced. This application is applied to a UWB-based WPAN system, a sensing system, or the like, including 802.15 series protocols, for example, the 802.15.4ab standard or a next-generation standard of 802.15.4ab. This application may be further applied to a WLAN system supporting 802.11 series protocols such as a next-generation Wi-Fi protocol of 802.11ax like 802.11be, Wi-Fi 7, or EHT, a next-generation protocol of 802.11be like Wi-Fi 8 or UHR, or Wi-Fi AI.

FIG. 6

EP 4 664 155 A1

**Description**

This application claims priority to Chinese Patent Application No. 202310260811.4, filed with the China National Intellectual Property Administration on March 10, 2023 and entitled "UWB-BASED PPDU TRANSMISSION METHOD AND APPARATUS", which is incorporated herein by reference in its entirety.

**TECHNICAL FIELD**

This application relates to the field of communication technologies, and in particular, to an ultra-wideband (ultra-wideband, UWB)-based physical layer protocol data unit (physical layer protocol data unit, PPDU) transmission method and an apparatus.

**BACKGROUND**

As ultra-wideband (ultra-wideband, UWB) enters a civilian field, ultra-wideband (UWB) wireless communication has become one of physical layer technologies for short-distance and high-speed wireless networks. An ultra-wideband (UWB) technology is a wireless carrier communication technology that can transmit data, for example, by using nanosecond-level non-sinusoidal wave narrow pulses, and therefore, occupies a very wide spectrum range. Because of narrow pulses and low radiation spectral density of the UWB, the UWB has advantages such as a strong multi-path resolution capability, low power consumption, and high confidentiality.

The institute of electrical and electronics engineers (institute of electrical and electronics engineers, IEEE) has incorporated the UWB technology into IEEE 802 series wireless standards and has released a high-speed wireless personal area network (wireless personal area network, WPAN) standard IEEE 802.15.4a based on the UWB technology, and an evolved version IEEE 802.15.4z of the IEEE 802.15.4a. A next-generation UWB wireless personal area network (WPAN) standard 802.15.4ab is under discussion. Because the ultra-wideband technology performs data transmission through sending and receiving of nanosecond-level and extremely narrow pulses rather than a carrier in a conventional communication system, the ultra-wideband technology has a high requirement on time synchronization of a transceiver device. Therefore, design of a synchronization sequence in the ultra-wideband technology is crucial.

Currently, some synchronization sequences (namely, preamble sequences) are defined in 802.15.4a and 802.15.4z standards. However, when a plurality of devices simultaneously perform communication transmission by using an existing synchronization sequence, strong interference may be generated, leading to a transmission failure.

**SUMMARY**

Embodiments of this application provide a UWB-based PPDU transmission method and an apparatus, which can reduce interference between perfect sequences while ensuring periodic autocorrelation characteristics of the perfect sequences (perfect sequences), thereby reducing interference between devices and supporting multi-device concurrent transmission.

The following describes this application from different aspects. It should be understood that the following implementations and beneficial effects of different aspects may be mutually referenced.

According to a first aspect, this application provides a UWB-based PPDU transmission method. The method includes: A communication apparatus generates and sends a PPDU. The PPDU includes a first sequence. A periodic autocorrelation main lobe amplitude of the first sequence is not zero and a periodic autocorrelation side lobe amplitude of the first sequence is zero. A periodic cross-correlation function of the first sequence and a second sequence has a maximum of three different values, and the first sequence and the second sequence belong to a same sequence pair. The first sequence may be used to implement one or more of the following functions: time synchronization, sensing measurement, ranging, or waking up a device. A specific function of the first sequence is not limited in this application. For example, the first sequence may be carried in one or more of the following fields of the PPDU: a synchronization field, a wake-up field, a sensing field, or a ranging field.

In this application, a sequence whose periodic autocorrelation main lobe amplitude is not 0 and periodic autocorrelation side lobe amplitude is 0 is referred to as a perfect sequence (Perfect Sequence). Correspondingly, a "perfect periodic autocorrelation characteristic" in this application may mean that a main lobe amplitude of periodic autocorrelation is not 0, and a side lobe amplitude of periodic autocorrelation is 0.

Because a sum of amplitudes of the periodic cross-correlation function of the two sequences is a fixed value, a smaller quantity of different values in the periodic cross-correlation function indicates a smaller maximum value of the amplitudes of the periodic cross-correlation function. An interference intensity between the two sequences mainly depends on a maximum value (namely, a maximum value of cross-correlation side lobe amplitudes) of the amplitudes of the periodic cross-correlation function of the two sequences. Therefore, in this embodiment of this application, the periodic cross-correlation function of the two sequences (for example, the first sequence and the second sequence) in the sequence pair is constrained to have a maximum of three different values, and a maximum value of the cross-correlation side lobe amplitudes of the two sequences is small, which can reduce interference between sequences while ensuring periodic autocorrelation characteristics of perfect sequences. In this way, when the two sequences (namely, the first sequence and the second sequence) are used for concurrent communication, interference between two devices is small, thereby supporting multi-device concurrent transmission and improving an overall system throughput rate.

With reference to the first aspect, in a possible implementation, before the communication apparatus sends the PPDU, the method may further include: The communication apparatus receives sequence configuration information. The sequence configuration information includes sequence index information of the communication apparatus, and the sequence index information corresponds to the first sequence or is used to determine the first sequence. For example, the sequence index information may include a sequence index, or the sequence index information includes a sequence index and an index of the sequence pair. In some scenarios, the sequence configuration information may further include sequence index information of another communication apparatus, which is used to determine the second sequence. The communication apparatus may be geographically adjacent to the another communication apparatus. In this application, two geographically adjacent communication apparatuses may be scheduled based on sequence configuration information, to simultaneously perform communication transmission by using different sequences in a sequence pair, thereby reducing interference, supporting multi-device concurrent transmission, and improving an overall system throughput rate.

According to a second aspect, this application provides a UWB-based PPDU transmission method. The method includes: A communication apparatus receives a PPDU and processes the PPDU. The PPDU includes a first sequence. A periodic autocorrelation main lobe amplitude of the first sequence is not zero and a periodic autocorrelation side lobe amplitude of the first sequence is zero. A periodic cross-correlation function of the first sequence and a second sequence has a maximum of three different values, and the first sequence and the second sequence belong to a same sequence pair. The first sequence may be used to implement one or more of the following functions: time synchronization, sensing measurement, ranging, or waking up a device. For example, the first sequence may be carried in one or more of the following fields of the PPDU: a synchronization field, a wake-up field, a sensing field, or a ranging field.

With reference to the second aspect, in a possible implementation, before the communication apparatus processes the PPDU, the method may further include: sending or receiving sequence configuration information. The sequence configuration information includes sequence index information, and the sequence index information corresponds to the first sequence or is used to determine the first sequence. For example, when the communication apparatus is used as a scheduler, the communication apparatus sends the sequence configuration information. When the communication apparatus is not a scheduler, the communication apparatus receives the sequence configuration information sent by a scheduler, to determine the first sequence. Then, the communication apparatus may further process the received PPDU by using the determined first sequence, for example, perform a correlation operation, and then perform, based on a result of the correlation operation, operations such as time synchronization, ranging, sensing measurement, or waking up a device. For example, the sequence index information may include a sequence index, or the sequence index information includes a sequence index and an index of the sequence pair.

In a possible implementation of any one of the foregoing aspects, the first sequence and the second sequence have a same length, which is represented by N. The periodic cross-correlation function $R_{\vec{\mathbf{u}}_{d_1},\vec{\mathbf{u}}_{d_2}}(t)$ of the first sequence and the second sequence includes one or more of the following values:

$$R_{\vec{\mathbf{u}}_{d_1},\vec{\mathbf{u}}_{d_2}}(t) = \begin{cases} 0, \text{ appearing } 2^n - 2^{(n-f)} - 1 \text{ times} \\ 2^{(n-f)/2}, \text{ appearing } 2^{(n-f-1)} + 2^{(n-f-2)/2} \text{ times} \\ -2^{(n-f)/2}, \text{ appearing } 2^{(n-f-1)} - 2^{(n-f-2)/2} \text{ times} \end{cases}.$$

Herein, $f=2 \times e-gcd(n, 3k)$, $e=gcd(n, k)$, and a quotient (namely, n/e) of dividing n by e is an odd number, gcd(n, k) represents a greatest common divisor of n and k, and gcd(n, 3k) represents a greatest common divisor of n and 3k. Herein, k is a positive integer, and n satisfies $2^n=N+1$. $\vec{\mathbf{u}}_{d_1}$ and $\vec{\mathbf{u}}_{d_2}$ respectively represent the first sequence and the second sequence.

For example, lengths of both the first sequence and the second sequence are 511 bits. The first sequence may be any sequence in Table 1 in the following embodiments, while the second sequence may be another sequence in Table 1 that belongs to a same sequence pair as the first sequence. Alternatively, lengths of both the first sequence and the second sequence are 127 bits. The first sequence may be any sequence in Table 2 in the following embodiments, while the second sequence may be another sequence in Table 2 that belongs to a same sequence pair as the first sequence.

In a possible implementation of any one of the foregoing aspects, the first sequence may be generated based on a $d_1$-times decimated sequence of an m-sequence, and the second sequence may be generated based on a $d_2$-times

decimated sequence of the m-sequence. $d_1$ and $d_2$ are different and $d_1$ and $d_2$ satisfy $d_1=(2^k+1)^{-1}$ and $d_2=2^{2k}-2^k+1$, or $d_1=(2^k+1)$ and $d_2=(2^{2k}-2^k+1)^{-1}$. Herein, a value of $(2^k+1)^{-1}$ may be solved by using $d_1 \times d_1^{-1}=1 \pmod N$, that is, $((2^k+1)^{-1} \times (2^k+1)) \bmod N=1$. Similarly, a value of $(2^{2k}-2^k+1)^{-1}$ may be solved by using $d_2 \times d_2^{-1}=1 \pmod N$, that is, $((2^{2k}-2^k+1)^{-1} \times (2^{2k}-2^k+1)) \bmod N=1$. Herein, k is a positive integer. N may represent a length of the m-sequence. For example, lengths of the first sequence, the second sequence, and the m-sequence are all the same. Specifically, for a generation manner and specific values of the first sequence and the second sequence (that is, the sequence pair), refer to descriptions in the following embodiments.

In a possible implementation of any one of the foregoing aspects, a periodic autocorrelation main lobe amplitude of the second sequence is not zero and a periodic autocorrelation side lobe amplitude of the second sequence is zero. In other words, the second sequence is also a perfect sequence.

According to a third aspect, an embodiment of this application provides a communication apparatus. The communication apparatus is configured to perform the method according to any one of the first aspect or the possible implementations of the first aspect. The communication apparatus includes a unit for performing the method according to any one of the first aspect or the possible implementations of the first aspect.

According to a fourth aspect, an embodiment of this application provides a communication apparatus. The communication apparatus is configured to perform the method according to any one of the second aspect or the possible implementations of the second aspect. The communication apparatus includes a unit for performing the method according to any one of the second aspect or the possible implementations of the second aspect.

In the third aspect or the fourth aspect, the communication apparatus may include a transceiver unit and a processing unit. For specific descriptions of the transceiver unit and the processing unit, refer to apparatus embodiments described below. For beneficial effects of the third aspect and the fourth aspect, refer to related descriptions of the first aspect and the second aspect. Details are not described herein again.

According to a fifth aspect, this application provides a communication apparatus. The communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

With reference to the fifth aspect, in a possible implementation, the memory is located outside the communication apparatus.

With reference to the fifth aspect, in a possible implementation, the memory is located inside the communication apparatus.

In this application, the processor and the memory may alternatively be integrated into one component. In other words, the processor and the memory may alternatively be integrated together.

With reference to the fifth aspect, in a possible implementation, the communication apparatus further includes a transceiver, and the transceiver is configured to send a PPDU.

According to a sixth aspect, this application provides a communication apparatus. The communication apparatus includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

With reference to the sixth aspect, in a possible implementation, the memory is located outside the communication apparatus.

With reference to the sixth aspect, in a possible implementation, the memory is located inside the communication apparatus.

In this application, the processor and the memory may alternatively be integrated into one component. In other words, the processor and the memory may alternatively be integrated together.

With reference to the sixth aspect, in a possible implementation, the communication apparatus further includes a transceiver, and the transceiver is configured to receive a PPDU.

According to a seventh aspect, this application provides a communication apparatus. The communication apparatus includes a logic circuit and an interface, and the logic circuit is coupled to the interface. The logic circuit is configured to generate a PPDU. The PPDU includes a first sequence. A periodic autocorrelation main lobe amplitude of the first sequence is not zero and a periodic autocorrelation side lobe amplitude of the first sequence is zero. A periodic cross-correlation function of the first sequence and a second sequence has a maximum of three different values, and the first sequence and the second sequence belong to a same sequence pair. The interface is configured to output the PPDU.

According to an eighth aspect, this application provides a communication apparatus. The communication apparatus includes a logic circuit and an interface, and the logic circuit is coupled to the interface. The interface is configured to input a PPDU. The PPDU includes a first sequence. A periodic autocorrelation main lobe amplitude of the first sequence is not zero and a periodic autocorrelation side lobe amplitude of the first sequence is zero. A periodic cross-correlation function of the first sequence and a second sequence has a maximum of three different values, and the first sequence and the second sequence belong to a same sequence pair. The logic circuit is configured to process the PPDU.

According to a ninth aspect, an embodiment of this application provides a computer-readable storage medium. The computer-readable storage medium is configured to store a computer program. When the computer program is run on a computer, the method according to any one of the first aspect or the possible implementations of the first aspect is performed.

According to a tenth aspect, an embodiment of this application provides a computer-readable storage medium. The computer-readable storage medium is configured to store a computer program. When the computer program is run on a computer, the method according to any one of the second aspect or the possible implementations of the second aspect is performed.

According to an eleventh aspect, an embodiment of this application provides a computer program product. The computer program product includes a computer program or computer code. When the computer program or the computer code is run on a computer, the method according to any one of the first aspect or the possible implementations of the first aspect is performed.

According to a twelfth aspect, an embodiment of this application provides a computer program product. The computer program product includes a computer program or computer code. When the computer program or the computer code is run on a computer, the method according to any one of the second aspect or the possible implementations of the second aspect is performed.

According to a thirteenth aspect, an embodiment of this application provides a computer program. When the computer program is run on a computer, the method according to any one of the first aspect or the possible implementations of the first aspect is performed.

According to a fourteenth aspect, an embodiment of this application provides a computer program. When the computer program is run on a computer, the method according to any one of the second aspect or the possible implementations of the second aspect is performed.

According to a fifteenth aspect, an embodiment of this application provides a wireless communication system. The wireless communication system includes a communication apparatus configured to perform the method according to any one of the first aspect or the possible implementations of the first aspect, and a communication apparatus configured to perform the method according to any one of the second aspect or the possible implementations of the second aspect.

For technical effects achieved in the foregoing aspects, refer to each other or refer to beneficial effects in method embodiment described below. Details are not repeated herein.

## BRIEF DESCRIPTION OF DRAWINGS

FIG. 1 is a diagram of a structure of a wireless communication system according to an embodiment of this application;
FIG. 2 is a diagram of another structure of a wireless communication system according to an embodiment of this application;
FIG. 3 is a diagram of a frame structure of a PPDU according to an embodiment of this application;
FIG. 4 is a diagram of a structure of an SHR according to an embodiment of this application;
FIG. 5 is a diagram of an autocorrelation simulation result of an Ipatov sequence according to an embodiment of this application;
FIG. 6 is a schematic flowchart of a UWB-based PPDU transmission method according to an embodiment of this application;
FIG. 7 is a diagram of a structure of a communication apparatus according to an embodiment of this application;
FIG. 8 is a diagram of another structure of a communication apparatus according to an embodiment of this application; and
FIG. 9 is a diagram of still another structure of a communication apparatus according to an embodiment of this application.

## DESCRIPTION OF EMBODIMENTS

The following clearly and completely describes the technical solutions in embodiments of this application with reference to the accompanying drawings in embodiments of this application.

In descriptions of this application, the terms "first", "second", and the like are merely intended to distinguish between different objects, but do not limit a quantity or an execution sequence, and the terms "first", "second", and the like do not indicate a definite difference either. In addition, the terms "include", "have", and any other variants thereof are intended to cover a non-exclusive inclusion. For example, a process, a method, a system, a product, a device, or the like that includes a series of steps or units is not limited to listed steps or units, but optionally further includes other unlisted steps or units, or optionally further include other steps or units inherent to the process, the method, the product, the device, or the like.

In descriptions of this application, "at least one" means one or more, "a plurality of" means two or more, and "at least two" means two, three, or more. In addition, the term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "One or more of the following" or a similar expression thereof means any combination of these items. For example, one or more of the following: a, b, or c, may represent: a, b, c, a and b, a and c, b and c, or a, b, and c.

In this application, the terms such as "example" or "for example" are used to represent giving an example, an illustration, or a description. Any embodiment or design scheme described by "example", "such as", or "for example" in this application should not be construed as being more preferred or having more advantages than another embodiment or design scheme. To be precise, the use of the terms such as "example", "such as", or "for example" are intended to present a related concept in a specific manner.

In this application, unless otherwise specified, an element indicated in a singular form is intended to indicate "one or more", but does not indicate "one and only one".

The technical solutions provided in this application are applicable to a UWB-based wireless personal area network (wireless personal area network, WPAN). For example, the method provided in this application is applicable to the IEEE 802.15 series protocols, for example, the 802.15.4a protocol, the 802.15.4z protocol, the 802.15.4ab protocol, or a future generation of UWB WPAN standard. Examples are not enumerated herein. The method provided in this application may be further applied to various communication systems, such as an internet of things (internet of things, IoT) system, vehicle-to-everything (vehicle to X, V2X), and a narrowband internet of things (narrowband internet of things, NB-IoT) system, or is applied to a device in vehicle-to-everything, an internet of things node, a sensor, or the like in the internet of things (IoT, internet of things), a smart camera, a smart remote control, and a smart water or electricity meter in a smart home, a sensor in a smart city, and the like. The method provided in this application is further applicable to a long term evolution (long term evolution, LTE) frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, an LTE system, a 5th-generation (5th-generation, 5G) communication system, a 6th-generation (6th-generation, 6G) communication system, and the like.

A UWB technology is a new wireless communication technology. In the UWB technology, a nanosecond-level non-sinusoidal narrow pulse is used for data transmission, and modulation is performed on an impulse with very steep rise and fall time. Therefore, the UWB technology has a wide spectrum range for transmission, so that a signal has a bandwidth of a gigahertz (GHz) magnitude. A bandwidth used by a UWB is usually greater than 1 GHz. A UWB system does not need to generate a sinusoidal carrier signal and may directly transmit an impulse sequence. Therefore, the UWB system has a very wide spectrum and very low average power. A UWB wireless communication system has advantages of a strong multi-path resolution capability, low power consumption, high confidentiality, and the like. This facilitates coexistence with other systems, thereby improving spectrum utilization and system capacity. In addition, in a short-range communication application, transmit power of a UWB transmitter may be usually lower than 1 mW (milliwatt). Theoretically, interference generated by a UWB signal is only equivalent to white noise. This facilitates good coexistence between the ultra-wideband and existing narrowband communication. Therefore, both the UWB system and a narrowband (narrowband, NB) communication system can operate without interfering with each other. The method provided in this application may be implemented by a communication apparatus in a wireless communication system. In a communication apparatus, an apparatus or a chip for implementing a function of a UWB system may be referred to as a UWB module, and an apparatus or a chip for implementing a function of a narrowband communication system may be referred to as a narrowband communication module. The UWB module and the narrowband communication module may be different apparatuses or chips. Certainly, the UWB module and the narrowband communication module may alternatively be integrated into one apparatus or chip. Implementations of the UWB module and the narrowband communication module in the communication apparatus are not limited in embodiments of this application. A communication apparatus in this application includes a UWB module, and optionally, further includes a narrowband communication module.

Embodiments of this application are mainly described by using a WPAN, for example, a network used in an IEEE 802.15 series standard, as an example. A person skilled in the art easily understands that, various aspects in this application may be extended to another network using various standards or protocols, for example, a wireless local area network (wireless local area network, WLAN), Bluetooth (BLUETOOTH), a high performance radio LAN (high performance radio LAN, HIPERLAN) (a wireless standard similar to the IEEE 802.11 standard, mainly used in Europe), a wide area network (WAN), or another network known now or developed in the future. Therefore, regardless of used coverage and a used wireless access protocol, various aspects provided in this application are applicable to any appropriate wireless network.

Optionally, the communication apparatus in embodiments of this application may be a device that supports a plurality of WPAN standards, such as 802.15.4a, 802.15.4z, IEEE 802.15.4ab currently under discussion, or a subsequent release.

For example, the method provided in this application may be implemented by a communication apparatus in a wireless communication system, and the communication apparatus may be an apparatus in a UWB system. For example, the communication apparatus may include but is not limited to a communication server, a router, a switch, a bridge, a computer, a mobile phone, and the like that support the UWB technology. For another example, the communication apparatus may include user equipment (user equipment, UE). The user equipment may include various devices that support the UWB technology, such as a handheld device, a vehicle-mounted device (for example, a vehicle or a component mounted in a vehicle), a wearable device, an internet of things (internet of things, IoT) device, a computing device, or another processing device connected to a wireless modem. Examples are not enumerated herein. For another example, the communication apparatus may include a central control point, for example, a personal area network (personal area network, PAN) or a PAN coordinator. The PAN coordinator or the PAN may be a mobile phone, a vehicle-mounted device, an anchor (Anchor), a tag (tag), a smart home, or the like. For yet another example, the communication apparatus may include a chip, and the chip may be disposed in a communication server, a router, a switch, a terminal device, or the like. Examples are not enumerated herein.

In embodiments of this application, the communication apparatus may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application.

It can be understood that the foregoing descriptions of the communication apparatus are applicable to a first communication apparatus and a second communication apparatus in embodiments of this application.

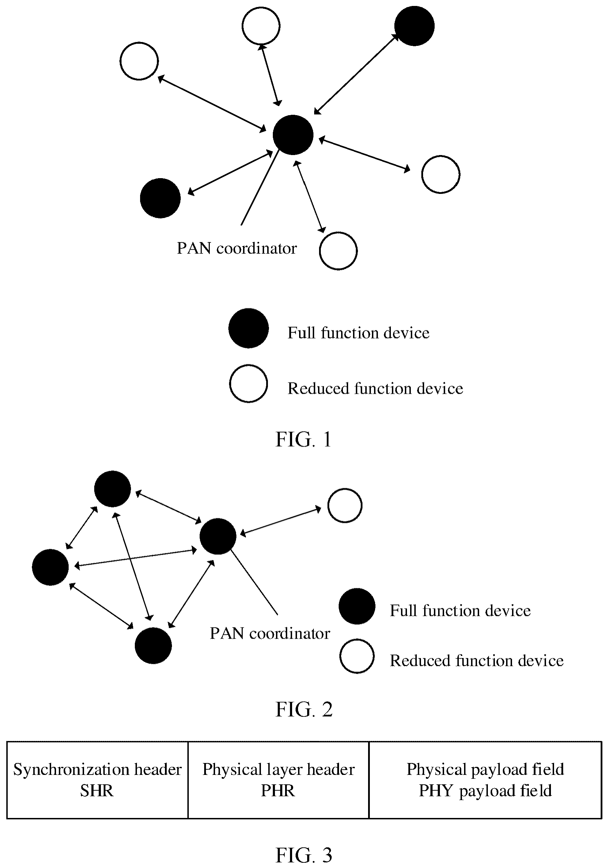

For example, FIG. 1 is a diagram of a structure of a wireless communication system according to an embodiment of this application. As shown in FIG. 1, the wireless communication system is a star topology structure. In this structure, a central control node (for example, a PAN coordinator in FIG. 1) may perform data communication with one or more other devices. FIG. 2 is a diagram of another structure of a wireless communication system according to an embodiment of this application. As shown in FIG. 2, the wireless communication system is a peer-to-peer topology structure. In this structure, a central control node (for example, a PAN coordinator in FIG. 2) may perform data communication with one or more other devices, and other different devices may also perform data communication with each other. In FIG. 1 and FIG. 2, both a full function device (full function device) and a reduced function device (reduced function device) may be understood as communication apparatuses shown in this application. The full function device is relative to the reduced function device. For example, the reduced function device cannot be a PAN coordinator (coordinator). For another example, compared with the full function device, the reduced function device may have no coordination capability or have a lower communication rate than the full function device. It may be understood that the PAN coordinator shown in FIG. 2 is merely an example, and each of the other three full function devices shown in FIG. 2 may alternatively serve as a PAN coordinator. Examples are not enumerated herein. It may be further understood that the full function device and the reduced function device in this application are merely examples of the communication apparatus, and any apparatus that can implement a UWB-based PPDU transmission method provided in this application falls within the protection scope of this application.

The following briefly describes some terms or nouns in this application.

1. Periodic autocorrelation function and periodic cross-correlation function

For a sequence $\mathbf{a} = [a_{0}, a_1, a_2, ..., a_{N-1}]$ with a length of N, a periodic autocorrelation function $R_{\mathbf{a}}(\tau)$ of the sequence is defined as follows:

$$R_{\mathbf{a}}(\tau) = \sum_{n=0}^{N-1} a_n \times a_{n+\tau}^* \quad\ldots\ldots\ldots\ldots\ldots\ldots\ldots\ldots\ldots\ldots\ldots\ldots\ldots\ldots\ldots(1\text{-}1)$$

Herein, $\tau \in [0, N\text{-}1]$, and when $n + \tau \geq N$, $a_{n+\tau}=a_{n+\tau\text{-}N}$. $a_{n+\tau}^{*}$ is a conjugate of $a_{n+\tau}$. Similar expressions in the following represent same meanings, and details are not described again.

A side lobe amplitude of a periodic autocorrelation function of the sequence a is $|R_a(\tau)|$, and $\tau \neq 0$. It may be understood that $|R_a(\tau)|$ represents an absolute value of the periodic autocorrelation function $R_a(\tau)$, and details are not described in the following. Usually, in a sequence design, a smaller side lobe amplitude of the periodic autocorrelation function within a specific range is better, that is, $|R_a(\tau)| \leq \varepsilon$, when $|\tau| \leq Z$ and $\tau \neq 0$. Herein, Z represents a preset specific range, and $|\tau|$ represents an absolute value of $\tau$.

For example, when $\varepsilon=0$, the sequence a is referred to as a zero-correlation zone sequence; or when $\varepsilon$ is far less than N, the sequence a is referred to as a low-correlation zone sequence.

$\mathbf{b} = [b_0,b_1,b_2,\cdots,b_{N\text{-}1}]$ is another sequence with a length of N, and a periodic cross-correlation function $R_{a,b}(\tau)$ of the sequence a and the sequence b is defined as follows:

$$R_{\mathbf{a},\mathbf{b}}(\tau)=\sum_{n=0}^{N-1} a_n \times b_{n+\tau}^{*} \ldots\ldots\ldots\ldots\ldots\ldots\ldots\ldots\ldots\ldots\ldots\ldots\ldots\ldots\ldots(1\text{-}2)$$

Herein, $\tau \in [0, N\text{-}1]$, and when $n + \tau \geq N$, $b_{n+\tau}=b_{n+\tau\text{-}N}$; and $b_{n+\tau}^{*}$ is a conjugate of $b_{n+\tau}$.

$R_{C\,max}$ represents a maximum value of amplitudes $|R_{a,b}(\tau)|$ of the periodic cross-correlation function. It may be understood that $|R_{a,b}(\tau)|$ represents an absolute value of the periodic cross-correlation function $R_{a,b}(\tau)$, and details are not described in the following. Usually, in a sequence design, a smaller inter-sequence $R_{C\,max}$ included in a sequence set is better, or a smaller cross-correlation value between any two sequences in the sequence set is better.

2. Structure of a PPDU in a UWB system

A basic structure of a PPDU defined in the IEEE 802.15.4a and IEEE 802.15.4z standards is shown in FIG. 3. FIG. 3 is a diagram of a frame structure of a PPDU according to an embodiment of this application. As shown in FIG. 3, the PPDU may include but is not limited to a synchronization header (synchronization header, SHR), a physical layer header (physical layer header, PHR), and a physical payload field (PHY payload field). A receive end may perform PPDU detection and synchronization based on the SHR. The PHR carries some physical layer indication information, such as modulation and coding information and a PPDU length, which may be used to assist the receive end in correctly demodulating data. The physical payload field is used to carry data.

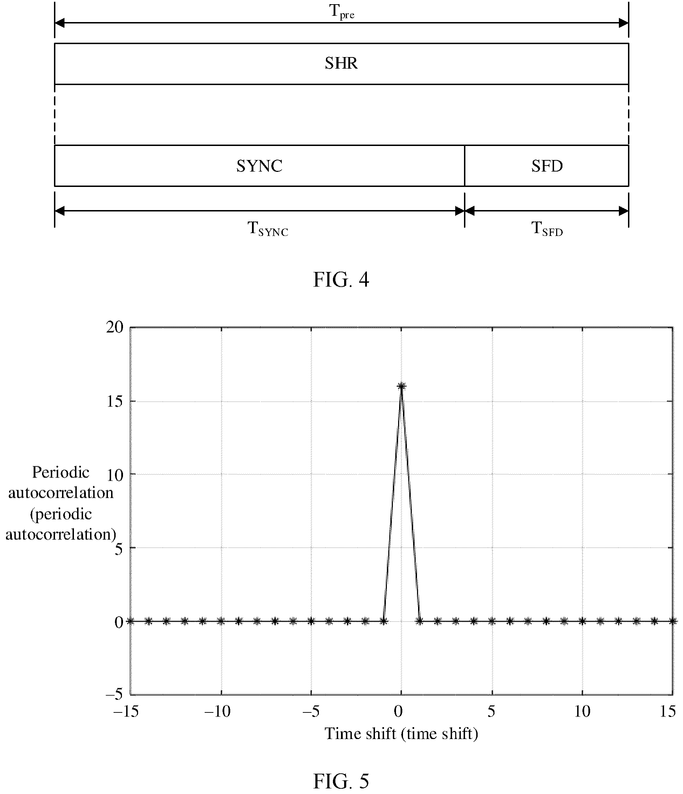

For example, as shown in FIG. 4, the synchronization header (SHR) may include a synchronization (synchronization, SYNC) field and a start-of-frame delimiter (start-of-frame delimiter, SFD) field. In FIG. 4, $T_{pre}$ represents a time length of each SHR, $T_{SYNC}$ represents a time length of an SYNC field, and $T_{SFD}$ represents a time length of an SFD field. The synchronization (SYNC) field may include a plurality of symbols, and the symbol is generated by using a preamble sequence. For a specific generation manner, refer to an existing standard, for example, the 802.15.4a or 802.15.4z standard. The preamble sequence may be an Ipatov sequence with a length of 31, 127, or 91. The Ipatov sequence is a ternary sequence including three elements {-1, 0, 1}, and has a periodic correlation characteristic of a perfect sequence. For specific content of Ipatov sequences with different lengths, refer to the 802.15.4a and 802.15.4z standards. Details are not further described herein.

For example, an Ipatov sequence with a length of 31 in the 802.15.4a standard is used as an example. A simulation result of a periodic autocorrelation characteristic of the Ipatov sequence is shown in FIG. 5. FIG. 5 is a diagram of an autocorrelation simulation result of an Ipatov sequence according to an embodiment of this application. As shown in FIG. 5, a periodic autocorrelation function of the Ipatov sequence with a length of 31 has a value at an origin (that is, the ordinate at the origin is not 0), and is 0 at all other places of the abscissa (that is, the ordinate at another non-origin point is 0). In FIG. 5, a periodic autocorrelation main lobe amplitude of the Ipatov sequence with a length of 31 is 16 (it may also be understood that a periodic autocorrelation peak value is 16), and a periodic autocorrelation side lobe amplitude is 0. It may be understood that the abscissa shown in FIG. 5 represents a time shift (time shift), and the ordinate represents a periodic autocorrelation (periodic autocorrelation) amplitude. The abscissa shown in FIG. 5 may alternatively be understood as an element, a position, or the like. Interpretation of the abscissa used in simulation of a periodic autocorrelation function is not limited in embodiments of this application. Because autocorrelation may be understood as a cross-correlation between a signal and the signal itself at different time points, values on a positive axis (0 to 15) and value on a negative axis (-15 to 0) in the abscissa may be determined by the length of the Ipatov sequence. FIG. 5 is merely an example for description, and is not limited.

In this application, a sequence whose periodic autocorrelation main lobe amplitude is not 0 and periodic autocorrelation side lobe amplitude is 0 is referred to as a perfect sequence (Perfect Sequence). It may be understood that a "perfect periodic autocorrelation characteristic" in this application means that a main lobe amplitude of periodic autocorrelation is not 0, and a side lobe amplitude of periodic autocorrelation is 0.

The receive end may use the periodic autocorrelation characteristic of the Ipatov sequence to perform correlation processing, for example, a correlation operation, on a received signal by using a same sequence, and perform, by using a result (for example, a position of a correlation peak) of correlation processing, operations such as synchronization, ranging, or sensing.

In the 802.15.4a and 802.15.4z standards, a plurality of Ipatov sequences are defined as preamble sequences, and a synchronization header (SHR) is generated by using a perfect periodic autocorrelation characteristic (which means that a main lobe amplitude of a periodic autocorrelation is not 0 and a side lobe amplitude of the periodic autocorrelation is 0) of the Ipatov sequence, so that synchronization precision of the receive end can be enhanced. However, in a conventional technology, a cross-correlation characteristic between Ipatov sequences is not considered, and a maximum value ($R_{C\,max}$) of periodic cross-correlation function amplitudes between different Ipatov sequences is relatively large. In this case, when a plurality of geographically adjacent devices simultaneously perform communication transmission by using different Ipatov sequences on a same channel, strong interference may be generated, leading to a transmission failure.

In view of this, embodiments of this application provide a UWB-based PPDU transmission method and an apparatus. A perfect sequence (perfect sequence) pair with a low cross-correlation characteristic is designed and used in a PPDU, to reduce interference between sequences while ensuring perfect periodic autocorrelation characteristics of the sequences. In this way, interference between geographically adjacent devices can be reduced as much as possible, thereby supporting multi-device concurrent transmission and improving an overall system throughput rate.

The following describes in detail the technical solutions provided in this application with reference to more accompanying drawings.

In this application, unless otherwise specified, for same or similar parts of embodiments or implementations, refer to each other. In embodiments of this application and implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

The communication apparatus in this application may not only support the 802.15 series protocols, such as the 802.15.4ab standard or a next-generation standard of 802.15.4ab, but also support other standard protocols (for example, the 802.11 series protocols), such as a plurality of wireless local area network (wireless local area network, WLAN) standards of an 802.11 family, for example, 802.11be, Wi-Fi 7, or EHT (extremely high throughput, extremely high throughput), and for another example, a next generation of 802.11be, Wi-Fi 8, UHR (ultra high throughput, ultra high throughput), or Wi-Fi AI (Wi-Fi artificial intelligence). Certainly, the communication apparatus in this application may further support 802.11bf or a next-generation standard of 802.1 1bf in a UWB-based sensing (sensing) protocol.

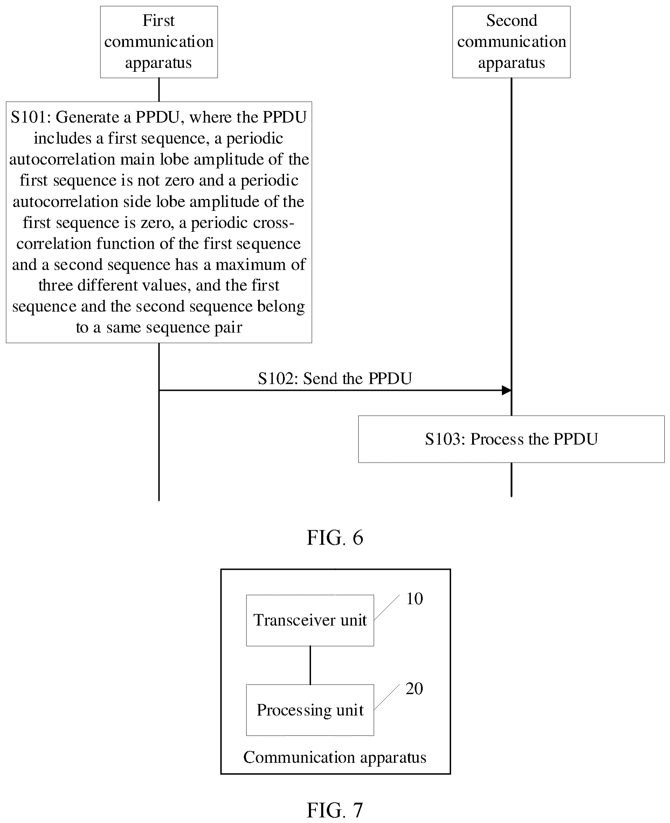

FIG. 6 is a schematic flowchart of a UWB-based PPDU transmission method according to an embodiment of this application. A first communication apparatus and a second communication apparatus in the method may be any two devices that can perform data transmission in FIG. 1 or FIG. 2. As shown in FIG. 6, the UWB-based PPDU transmission method includes but is not limited to the following steps.

S101: A first communication apparatus generates a PPDU, where the PPDU includes a first sequence, a periodic autocorrelation main lobe amplitude of the first sequence is not zero and a periodic autocorrelation side lobe amplitude of the first sequence is zero, a periodic cross-correlation function of the first sequence and a second sequence has a maximum of three different values, and the first sequence and the second sequence belong to a same sequence pair.

S102: The first communication apparatus sends the PPDU.

Correspondingly, the second communication apparatus receives the PPDU.

S103: The second communication apparatus processes the PPDU.

Optionally, the PPDU includes the first sequence, and the first sequence may be used to implement one or more of the following functions: time synchronization, sensing measurement, ranging, or waking up a device. For example, the first sequence may be carried in one or more of the following fields of the PPDU: a synchronization (SYNC) field, a wake-up (wake-up) field, a sensing (sensing) field, or a ranging (ranging) field. A specific function of the first sequence is not limited in embodiments of this application.

Optionally, a periodic autocorrelation main lobe amplitude of the first sequence is not zero, and a periodic autocorrelation side lobe amplitude of the first sequence is zero. In other words, the first sequence is a perfect sequence (perfect sequence). The first sequence may be any sequence in a sequence set, and the sequence set may further include the second sequence. A periodic autocorrelation main lobe amplitude of the second sequence is not zero and a periodic autocorrelation side lobe amplitude of the second sequence is zero. In other words, the second sequence is also a perfect sequence. In addition, the periodic cross-correlation function of the second sequence and the first sequence has a maximum of three different values. The first sequence and the second sequence may form a sequence pair, and may be used when two geographically adjacent devices simultaneously perform communication transmission on a same channel. The first sequence and the second sequence may be ternary sequences including three elements: {-1, 0, 1}. For example, lengths of the first sequence and the second sequence may be the same. For example, the lengths of the first sequence and the second sequence are both 511 bits or 127 bits.

Because a sum of amplitudes of the periodic cross-correlation function of the two sequences is a fixed value, a smaller quantity of different values in the periodic cross-correlation function indicates a smaller maximum value ($R_{C\,max}$) of the amplitudes of the periodic cross-correlation function. An interference intensity between the two sequences mainly depends on a maximum value $R_{C\,max}$ (namely, a maximum value of cross-correlation side lobe amplitudes) of the amplitudes of the periodic cross-correlation function of the two sequences. Therefore, in this embodiment of this application, the periodic cross-correlation function of the two perfect sequences (for example, the first sequence and the second sequence) in the sequence pair is constrained to have a maximum of three different values, and a maximum value of the cross-correlation side lobe amplitudes of the two sequences is small, which can reduce interference between sequences while ensuring periodic autocorrelation characteristics of perfect sequences, thereby supporting multi-device concurrent transmission and improving an overall system throughput rate.

Optionally, the first sequence may be generated based on a $d_1$-times decimated sequence of an m-sequence, and the second sequence may be generated based on a $d_2$-times decimated sequence of the m-sequence. $d_1$ and $d_2$ are different and $d_1$ and $d_2$ satisfy $d_1=(2^k+1)^{-1}$ and $d_2=2^{2k}-2^k+1$, or $d_1=(2^k+1)$ and $d_2=(2^{2k}-2^k+1)^{-1}$. Herein, a value of $(2^k+1)^{-1}$ may be solved by using $d_1\times d_1^{-1}=1(mod\ N)$, that is, $((2^k+1)^{-1}\times(2^k+1))\ mod\ N=1$. Similarly, a value of $(2^{2k}-2^k+1)^{-1}$ may be solved by using $d_2\times d_2^{-1}=1(mod\ N)$, that is, $((2^{2k}-2^k+1)^{-1}\times(2^{2k}-2^k+1))\ mod\ N=1$. Herein, k is a positive integer. N may represent a length of the m-sequence. For example, lengths of the first sequence, the second sequence, and the m-sequence are all the same. Specifically, for a generation manner and specific values of the first sequence and the second sequence (that is, the sequence pair), refer to descriptions in the following.

It may be understood that the m-sequence, short for maximum-length linear feedback shift register sequence, is a sequence with a longest period generated by a linear feedback shift register. Generally, an n-stage linear feedback shift register may generate a sequence with a longest period of $2^n-1$. The m-sequence is a typical pseudo-random sequence, and is widely used in the communication field. In all pseudo-random sequences, the m-sequence is the most important and basic pseudo-random sequence. The m-sequence is easy to produce, has strong regularity, and has good autocorrelation and good cross-correlation characteristics.

Optionally, the first sequence may be pre-configured. For example, a third communication apparatus may send sequence configuration information. The sequence configuration information includes sequence index information A of the first communication apparatus. The sequence index information A may correspond to the first sequence or may be used to determine the first sequence. After receiving the sequence configuration information, the first communication apparatus determines the first sequence based on the sequence index information A in the sequence configuration information. In some scenarios, for example, the third communication apparatus is expected to schedule the first communication apparatus and a fourth communication apparatus that are geographically adjacent to each other to simultaneously perform communication transmission on a same channel. In this case, the sequence configuration information may further include sequence index information B of the fourth communication apparatus. The sequence index information B may correspond to the second sequence or may be used to determine the second sequence. The second sequence and the first sequence belong to a same sequence pair. Certainly, the third communication apparatus may alternatively separately send the sequence index information B to the fourth communication apparatus, instead of sending the sequence index information B together with the sequence index information A. The sequence index information A may include a sequence index, or the sequence index information A includes a sequence index and an index of the sequence pair. Similarly, the sequence index information B may include a sequence index, or the sequence index information B includes a sequence index and an index of the sequence pair. The third communication apparatus and the second communication apparatus may be a same communication apparatus, or may be different communication apparatuses. When the third communication apparatus is different from the second communication apparatus, the second communication apparatus also needs to learn the sequence index information A of the first communication apparatus, to determine the first sequence, which is used to perform processing (for example, a correlation operation) on the received PPDU. For example, the second communication apparatus may also receive the sequence configuration information, determine the first sequence based on the sequence index information A in the sequence configuration information, process the received PPDU by using the determined first sequence, for example, perform a correlation operation, and then perform, based on a result of the correlation operation, operations such as time synchronization, ranging, sensing measurement, or waking up a device.

In this embodiment of this application, a ternary perfect sequence pair with a low cross-correlation characteristic is designed and used in a PPDU. Because a periodic cross-correlation function of the ternary perfect sequence pair has a maximum of three different values, a maximum value $R_{C\,max}$ of cross-correlation side lobe amplitudes of the ternary perfect sequence pair is small, which can reduce interference between perfect sequences while ensuring periodic autocorrelation characteristics (that is, a periodic autocorrelation main lobe amplitude is not zero and a periodic autocorrelation side lobe amplitude is zero) of the perfect sequences to reduce interference between devices as much as possible, thereby supporting multi-device concurrent transmission and improving an overall system throughput rate.

The following describes, by using an example, the first sequence and the second sequence (that is, the sequence pair) provided in embodiments of this application and a method for generating the first sequence and the second sequence.

For example, a possible generation manner of the sequence pair is as follows.

$\vec{s}$ represents an m-sequence with a length of N, where $N=2^n-1$. It is assumed that s(i) represents an $i^{th}$ element in the sequence $\vec{s}$, and i=0, 1, 2, ..., (N-1). A d-times decimated sequence $\vec{s}_d$ of the sequence $\vec{s}$ is generated according to the following formula (2-1):

$$s_d(i) = \begin{cases} s(d*i), & \text{if } d*i \leq N-1 \\ s(r), r = \text{mod}(d*i, N), & \text{if } d*i \geq N \end{cases} \quad \dots\dots\dots\dots(2\text{-}1)$$

Herein, $s_d(i)$ represents an $i^{th}$ element in the sequence $\vec{s}_d$. mod(d*i, N) represents a remainder of (d*i) divided by N, and details are not described in the following. A greatest common divisor of d and N is 1. That is, d and N are coprime. In this application, the symbol "*" represents a meaning of multiplication or being multiplied by. Details are not described in other parts of this specification.

When $d=2^k+1$ or $d=2^{2k}-2^k+1$, a periodic cross-correlation function $R_{\vec{s},\vec{s}_d}(t)$ of the sequence $\vec{s}$ and the sequence $\vec{s}_d$ has a maximum of three different values.

$$R_{\vec{s},\vec{s}_d}(t) = \begin{cases} -1+2^{\frac{n+e}{2}}, & \text{appearing } 2^{(n-e-2)/2} \text{ times} \\ -1, & \text{appearing } 2^n-2^{(n-e)}-1 \text{ times} \\ -1-2^{\frac{n+e}{2}}, & \text{appearing } 2^{(n-e-1)}-2^{(n-e-2)/2} \text{ times} \end{cases} \quad \dots\dots\dots\dots(2\text{-}2)$$

Herein, e=gcd(n, k) and n/e is an odd number. gcd(n, k) represents a greatest common divisor of n and k, and details are not described in the following. n may be determined based on a length N of the sequence $\vec{s}$ That is, $N=2^n-1$. Herein, k is a positive integer.

Then, a ternary perfect sequence $\vec{u}_d$ may be constructed according to the following formula (2-3):

$$u_d(t) = (R_{\vec{s},\vec{s}_d}(t)+1) \times 2^{-(n+e)/2} \quad \dots\dots\dots\dots\dots\dots\dots\dots\dots\dots(2\text{-}3)$$

Herein, $u_d(t)$ represents a $t^{th}$ element in the sequence $\vec{u}_d$.

For an integer d, it is assumed that another integer $d^{-1}$ satisfies an equation $d^{-1}\times d=1 \pmod N$. That is, $(d^{-1}\times d)$ mod N=1. A periodic cross-correlation function $R_{\vec{s},\vec{s}_{d^{-1}}}(t)$ of an integer $d^{-1}$-times decimated sequence $\vec{s}_{d^{-1}}$ and the original sequence $\vec{s}$, and a periodic cross-correlation function $R_{\vec{s},\vec{s}_d}(t)$ of the d-times decimated sequence $\vec{s}_d$ and the original sequence $\vec{s}$ satisfy the following relationship:

$$R_{\vec{s},\vec{s}_d}(t) = R_{\vec{s},\vec{s}_{d^{-1}}}(-d\times t)_N \quad \dots\dots\dots\dots\dots\dots\dots\dots\dots\dots\dots\dots(2\text{-}4)$$

Herein, $(-d\times t)_N$ represents $(-d\times t)$ mod N. It may be understood that "mod" in this application represents a modulo operation. Details are not described in other parts of this specification.

It may be understood that when d has different values, different ternary perfect sequences may be generated in the foregoing manner. For example, when d is $d_1$, a ternary perfect sequence $\vec{u}_{d_1}$ may be generated in the foregoing manner; and when d is $d_2$, a ternary perfect sequence $\vec{u}_{d2}$ may be generated in the foregoing manner. When $d_1=(2^k+1)^{-1}$ and $d_2=2^{2k}-2^k+1$, or $d_1=2^k+1$ and $d_2=(2^{2k}-2k+1)^{-1}$, a maximum value of amplitudes of a periodic cross-correlation function $R_{\vec{u}_{d_1},\vec{u}_{d_2}}(t)$ of sequences $\vec{u}_{d1}$ and $\vec{u}_{d2}$ (for example, the first sequence and the second sequence) is low, and the periodic cross-correlation function has a maximum of three different values, as shown in the following formula (2-5). Herein, $d_1\times d_1^{-1}=1 \pmod N$, and $d_2\times d_2^{-1}=1 \pmod N$

$$R_{\ddot{u}_{d_1},\ddot{u}_{d_2}}(t) = \begin{cases} 0, \text{ appearing } 2^n - 2^{(n-f)} - 1 \text{ times} \\ 2^{(n-f)/2}, \text{ appearing } 2^{(n-f-1)} + 2^{(n-f-2)/2} \text{ times} \\ -2^{(n-f)/2}, \text{ appearing } 2^{(n-f-1)} - 2^{(n-f-2)/2} \text{ times} \end{cases} \quad \text{.........................(2-5)}$$

Herein, $f = 2^*e - \gcd(n, 3k)$. $\gcd(n, 3k)$ represents a greatest common divisor of $n$ and $3k$, $k$ is a positive integer, and $n$ may be determined based on a length $N$ of the sequence $\vec{s}$

The following proves, through theoretical deduction, that when $d_1 = (2^k+1)^{-1}$ and $d_2 = 2^{2k} - 2^k + 1$, or $d_1 = 2^k + 1$ and $d_2 = (2^{2k} - 2^k + 1)^{-1}$, the periodic cross-correlation function $R_{\ddot{u}_{d_1},\ddot{u}_{d_2}}(t)$ of the sequence $\vec{u}_{d_1}$ and the sequence $\vec{u}_{d_2}$ satisfies the foregoing formula (2-5).

First,

$$R_{\ddot{u}_{d_1},\ddot{u}_{d_2}}(t) = \sum_{i=0}^{N-1} u_{d_1}(i) \times u_{d_2}^*(i+t) = 2^{-(n+e)}\left[\sum_{i=0}^{N-1}\left(1 + R_{\dot{s},\dot{s}_{d_1}}(i)\right) \times \left(1 + R_{\dot{s},\dot{s}_{d_2}}(i+t)\right)\right]$$

$$= 2^{-(n+e)}\left[2^n - 1 + \sum_{i=0}^{N-1} R_{\dot{s},\dot{s}_{d_1}}(i) + \sum_{i=0}^{N-1} R_{\dot{s},\dot{s}_{d_2}}(i+t) + \sum_{i=0}^{N-1} R_{\dot{s},\dot{s}_{d_1}}(i) \times R_{\dot{s},\dot{s}_{d_2}}(i+t)\right]$$

$$= 2^{-(n+e)}\left[2^n + 1 + \sum_{i=0}^{N-1} R_{\dot{s},\dot{s}_{d_1}}(i) \times R_{\dot{s},\dot{s}_{d_2}}(i+t)\right] \quad \text{.........(2-6)}$$

$$= 2^{-(n+e)}\left[2^n + 1 + 2^n \times R_{\dot{s}_{d_1},\dot{s}_{d_2}}(t) - \sum_{i=0}^{N-1} R_{\dot{s}_{d_1},\dot{s}_{d_2}}(i+t)\right]$$

$$= 2^{-e}\left[1 + R_{\dot{s}_{d_1},\dot{s}_{d_2}}(t)\right]$$

It can be learned from formula (2-6) that, the periodic cross-correlation function $R_{\ddot{u}_{d_1},\ddot{u}_{d_2}}(t)$ of the sequence $\vec{u}_{d_1}$ and the sequence $\vec{u}_{d_2}$ is related to a periodic cross-correlation function of a $d_1$-times decimated sequence $\vec{s}_{d_1}$ of the sequence $\vec{s}$ and a $d_2$-times decimated sequence $\vec{s}_{d_2}$. The periodic cross-correlation function of the sequence $\vec{s}_{d_1}$ and the sequence $\vec{s}_{d_2}$ satisfies the following formula (2-7):

$$R_{\dot{s}_{d_1},\dot{s}_{d_2}}(t) = \sum_{i=0}^{N-1} s_{d_1}(i) s_{d_2}^*(i+t)$$

$$= \sum_{i=0}^{N-1} s(d_1 i) s(d_2(i+t)) \quad \text{...............................................................(2-7)}$$

$$= \sum_{j=0}^{N-1} s(j) s\left(d_2 d_1^{-1}(j + d_1 t)\right)$$

Herein, $j = (d_1 \times i) \bmod N$. It can also be learned from the foregoing that, when $d = 2^k + 1$ or $d = 2^{2k} - 2^k + 1$, the periodic cross-correlation function $R_{\dot{s},\dot{s}_d}(t)$ of the sequence $\vec{s}$ and the $d$-times decimated sequence $\vec{s}_d$ of the sequence $\vec{s}$ has a maximum of three different values, that is, the foregoing formula (2-2) is satisfied. When the periodic cross-correlation function $R_{\dot{s},\dot{s}_d}(t)$ of the sequence $\vec{s}$ and the sequence $\vec{s}_d$ has three different values, that is, when the foregoing formula (2-2) is satisfied, the periodic cross-correlation function $R_{\ddot{u}_{d_1},\ddot{u}_{d_2}}(t)$ of the sequence $\vec{u}_{d_1}$ and the sequence $\vec{u}_{d_2}$ has three different values. Therefore, with reference to formula (2-7), it can be learned that when $d_2 \times d_1^{-1} = 2^{3k} + 1$, the periodic cross-correlation function $R_{\ddot{u}_{d_1},\ddot{u}_{d_2}}(t)$ of the sequence $\vec{u}_{d_1}$ and the sequence $\vec{u}_{d_2}$ has a maximum of three different values. When a condition $d_2 \times d_1^{-1} = 2^{3k} + 1$ is satisfied, it can be learned through observation that when $d_1 = (2^k+1)^{-1}$ and $d_2 = 2^{2k} - 2^k + 1$, or $d_1 = 2^k + 1$ and $d_2 = (2^{2k} - 2^k + 1)^{-1}$, the periodic cross-correlation function $R_{\ddot{u}_{d_1},\ddot{u}_{d_2}}(t)$ of the sequence $\vec{u}_{d_1}$ and the

sequence $\vec{u}_{d_2}$ satisfies the foregoing formula (2-5).

For example, when n is equal to 9, the following original m-sequence with a length N being 511 (that is, $2^n$-1) is used as an example.

$$\vec{s} = \{1 \quad 1 \quad 1 \quad 1 \quad 1 \; {-}1 \; {-}1 \; {-}1 \; {-}1 \quad 1 \; {-}1 \; {-}1 \; {-}1 \; {-}1 \; {-}1 \quad 1 \quad 1 \quad 1 \; {-}1 \quad 1 \; {-}1 \; {-}1 \; {-}1 \quad 1$$

$$1 \; {-}1 \; {-}1 \quad 1 \quad 1 \; {-}1 \quad 1 \quad 1 \quad 1 \quad 1 \quad 1 \; {-}1 \quad 1 \quad 1 \; {-}1 \quad 1 \; {-}1 \; {-}1 \quad 1 \quad 1 \; {-}1 \; {-}1 \; {-}1 \quad 1 \; {-}1 \; {-}1 \quad 1 \; {-}1 \quad 1$$

$$1 \quad 1 \; {-}1 \; {-}1 \; {-}1 \; {-}1 \quad 1 \quad 1 \; {-}1 \; {-}1 \; {-}1 \; {-}1 \; {-}1 \quad 1 \quad 1 \; {-}1 \; {-}1 \quad 1 \; {-}1 \; {-}1 \quad 1 \quad 1 \quad 1 \; {-}1 \quad 1 \; {-}1 \quad 1 \; {-}1 \quad 1$$

$$1 \; {-}1 \quad 1 \quad 1 \quad 1 \; {-}1 \; {-}1 \; {-}1 \quad 1 \quad 1 \quad 1 \; {-}1 \; {-}1 \quad 1 \; {-}1 \; {-}1 \quad 1 \; {-}1 \quad 1 \; {-}1 \quad 1 \; {-}1 \; {-}1 \; {-}1 \quad 1 \quad 1 \quad 1 \; {-}1 \quad 1$$

$$1 \; {-}1 \; {-}1 \quad 1 \quad 1 \quad 1 \; {-}1 \quad 1 \quad 1 \quad 1 \; {-}1 \quad 1 \quad 1 \quad 1 \quad 1 \quad 1 \quad 1 \quad 1 \quad 1 \; {-}1 \quad 1 \quad 1 \quad 1 \quad 1 \; {-}1 \quad 1 \quad 1$$

$$1 \; {-}1 \; {-}1 \quad 1 \quad 1 \quad 1 \quad 1 \; {-}1 \quad 1 \quad 1 \; {-}1 \; {-}1 \; {-}1 \quad 1 \quad 1 \; {-}1 \quad 1 \; {-}1 \quad 1 \; {-}1 \quad 1 \; {-}1 \; {-}1 \quad 1 \quad 1 \quad 1 \quad 1 \; {-}1 \; {-}$$

$$1 \quad 1 \; {-}1 \; {-}1 \; {-}1 \; {-}1 \quad 1 \; {-}1 \quad 1 \quad 1 \; {-}1 \; {-}1 \quad 1 \; {-}1 \; {-}1 \; {-}1 \quad 1 \quad 1 \; {-}1 \quad 1 \quad 1 \quad 1 \; {-}1 \quad 1 \; {-}1 \quad 1 \quad 1 \quad 1 \quad 1$$

$${-}1 \quad 1 \; {-}1 \quad 1 \; {-}1 \; {-}1 \quad 1 \; {-}1 \quad 1 \quad 1 \; {-}1 \; {-}1 \; {-}1 \; {-}1 \; {-}1 \; {-}1 \quad 1 \; {-}1 \; {-}1 \quad 1 \quad 1 \; {-}1 \quad 1 \quad 1 \; {-}1 \quad 1 \quad 1 \; {-}1 \quad 1$$

$${-}1 \; {-}1 \quad 1 \; {-}1 \; {-}1 \; {-}1 \; {-}1 \; {-}1 \; {-}1 \quad 1 \quad 1 \; {-}1 \quad 1 \quad 1 \; {-}1 \; {-}1 \quad 1 \; {-}1 \quad 1 \; {-}1 \quad 1 \quad 1 \; {-}1 \; {-}1 \quad 1 \quad 1 \; {-}1 \; {-}1 \quad 1$$

$$1 \quad 1 \quad 1 \quad 1 \quad 1 \quad 1 \; {-}1 \; {-}1 \quad 1 \quad 1 \quad 1 \; {-}1 \; {-}1 \quad 1 \; {-}1 \quad 1 \; {-}1 \quad 1 \quad 1 \; {-}1 \; {-}1 \quad 1 \; {-}1 \quad 1 \quad 1 \; {-}1$$

$$1 \; {-}1 \; {-}1 \; {-}1 \; {-}1 \; {-}1 \; {-}1 \; {-}1 \quad 1 \; {-}1 \quad 1 \quad 1 \; {-}1 \quad 1 \; {-}1 \; {-}1 \quad 1 \quad 1 \; {-}1 \; {-}1 \; {-}1 \quad 1 \; {-}1 \quad 1 \; {-}1 \; {-}1 \quad 1$$

$$1 \; {-}1 \quad 1 \; {-}1 \; {-}1 \quad 1 \quad 1 \; {-}1 \; {-}1 \; {-}1 \; {-}1 \quad 1 \quad 1 \; {-}1 \; {-}1 \; {-}1 \; {-}1 \; {-}1 \quad 1 \; {-}1 \; {-}1 \; {-}1 \quad 1 \; {-}1 \quad 1 \quad 1 \quad 1 \quad 1$$

$$1 \; {-}1 \; {-}1 \quad 1 \; {-}1 \quad 1 \; {-}1 \; {-}1 \quad 1 \; {-}1 \; {-}1 \quad 1 \; {-}1 \; {-}1 \; {-}1 \quad 1 \; {-}1 \; {-}1 \quad 1 \quad 1 \quad 1 \quad 1 \quad 1 \; {-}1 \quad 1 \; {-}1 \; {-}1 \quad 1 \; {-}1$$

$$1 \; {-}1 \; {-}1 \; {-}1 \; {-}1 \; {-}1 \quad 1 \; {-}1 \quad 1 \; {-}1 \quad 1 \; {-}1 \quad 1 \; {-}1 \quad 1 \quad 1 \quad 1 \quad 1 \quad 1 \; {-}1 \quad 1 \; {-}1 \quad 1 \; {-}1 \quad 1 \; {-}1 \quad 1$$

$${-}1 \; {-}1 \; {-}1 \; {-}1 \quad 1 \; {-}1 \quad 1 \; {-}1 \; {-}1 \; {-}1 \; {-}1 \quad 1 \; {-}1 \; {-}1 \; {-}1 \quad 1 \quad 1 \quad 1 \quad 1 \quad 1 \quad 1 \; {-}1 \; {-}1 \; {-}1 \quad 1 \; {-}1 \; {-}1 \; {-}1$$

$$1 \; {-}1 \quad 1 \quad 1 \; {-}1 \quad 1 \quad 1 \; {-}1 \; {-}1 \; {-}1 \; {-}1 \quad 1 \; {-}1 \quad 1 \; {-}1 \; {-}1 \; {-}1 \; {-}1 \quad 1 \; {-}1 \quad 1 \; {-}1 \quad 1 \quad 1 \; {-}1 \quad 1 \; {-}1 \quad 1$$

$$1 \quad 1 \quad 1 \; {-}1 \; {-}1 \quad 1 \quad 1 \; {-}1 \; {-}1 \; {-}1 \quad 1 \quad 1 \quad 1 \quad 1 \; {-}1 \quad 1 \; {-}1 \; {-}1 \; {-}1 \; {-}1 \quad 1 \; {-}1 \; {-}1 \quad 1 \; {-}1 \; {-}1 \quad 1 \quad 1 \; {-}1$$

$${-}1 \quad 1 \; {-}1 \quad 1 \quad 1 \quad 1 \quad 1 \; {-}1 \; {-}1 \; {-}1 \quad 1 \; {-}1 \; {-}1 \; {-}1 \; {-}1 \quad 1 \quad 1 \quad 1 \quad 1 \; {-}1 \; {-}1 \; {-}1 \; {-}1 \; {-}1 \; {-}1 \; {-}1 \; {-}1 \; {-}1\}$$

When $d_1 = 2^k + 1$ and $d_2 = (2^{2k} - 2^k + 1)^{-1}$, according to the foregoing generation manner of the sequence pair, when k=1, 2, 3, ..., 8, eight pairs of ternary perfect sequences may be obtained. For example, when k is equal to 1, a sequence pair of $\vec{u}_3$ and $\vec{u}_{341}$ may be obtained. When k is equal to 2, a sequence pair of $\vec{u}_5$ and $\vec{u}_{118}$ may be obtained. When k is equal to 3, a sequence pair of $\vec{u}_9$ and $\vec{u}_{260}$ may be obtained. When k is equal to 4, a sequence pair of $\vec{u}_{17}$ and $\vec{u}_{229}$ may be obtained. When k is equal to 5, a sequence pair of $\vec{u}_{33}$ and $\vec{u}_{370}$ may be obtained. When k is equal to 6, a sequence pair of $\vec{u}_{65}$ and $\vec{u}_{288}$ may be obtained. When k is equal to 7, a sequence pair of $\vec{u}_{129}$ and $\vec{u}_{355}$ may be obtained. When k is equal to 8, a sequence pair of $\vec{u}_{257}$ and $\vec{u}_{342}$ may be obtained. It may be understood that when k is equal to 1, $d_1 = 2^1 + 1 = 3$, $d_2$ may be solved by using $d_2 \times d_2^{-1} = (2^{2k} - 2^k + 1)^{-1} \times (2^{2k} - 2^k + 1) = d_2 \times 3 = 1 \pmod{N}$, and N=511. Therefore, $d_2$=341. It may be further understood that a calculation manner of $d_1$ and $d_2$ when k is equal to another value is the same as a calculation manner of $d_1$ and $d_2$ when k is equal to 1. Details are not described herein.

When $d_1 = (2^k + 1)^{-1}$ and $d_2 = 2^{2k} - 2^k + 1$, according to the foregoing generation manner of the sequence pair, when k=2, 3, 4, ..., 8, seven pairs of ternary perfect sequences may be obtained. For example, when k is equal to 2, a sequence pair of $\vec{u}_{409}$ and $\vec{u}_{13}$ may be obtained. When k is equal to 3, a sequence pair of $\vec{u}_{284}$ and $\vec{u}_{57}$ may be obtained. When k is equal to 4, a sequence pair of $\vec{u}_{481}$ and $\vec{u}_{241}$ may be obtained. When k is equal to 5, a sequence pair of $\vec{u}_{31}$ and $\vec{u}_{482}$ may be obtained. When k is equal to 6, a sequence pair of $\vec{u}_{228}$ and $\vec{u}_{456}$ may be obtained. When k is equal to 7, a sequence pair of $\vec{u}_{103}$ and $\vec{u}_{416}$ may be obtained. When k is equal to 8, a sequence pair of $\vec{u}_{171}$ and $\vec{u}_{384}$ may be obtained. It may be understood that when k is equal to 2, $d_2 = 2^4 - 2^2 + 1 = 13$, $d_1$ may be solved by using $d_1 \times d_1^{-1} = (2^k + 1)^{-1} \times (2^k + 1) = d_1 \times 5 = 1 \pmod{N}$, and N=511. Therefore, $d_1$=409. It may be further understood that a calculation manner of $d_1$ and $d_2$ when k is equal to another value is the same as a calculation manner of $d_1$ and $d_2$ when k is equal to 2. Details are not described herein.

The following Table 1 shows specific values of the foregoing 15 pairs of ternary perfect sequences. For example, the first sequence may be any sequence in the following Table 1, and the second sequence is another sequence that belongs to a same sequence pair as the first sequence. For example, if the first sequence is $\vec{u}_3$, the second sequence may be $\vec{u}_{341}$. Certainly, the first sequence may alternatively be $\vec{u}_{341}$, and the second sequence is $\vec{u}_3$. This embodiment of this application does not restrict which sequence within the sequence pair corresponds to the first or second sequence, provided that the first sequence and the second sequence belong to a same sequence pair. For another example, the first sequence is $\vec{u}_{118}$, and the second sequence may be $\vec{u}_5$. Alternatively, the first sequence is $\vec{u}_{129}$, and the second sequence may be $\vec{u}_{355}$. Alternatively, the first sequence is $\vec{u}_{260}$, and the second sequence may be $\vec{u}_9$. Alternatively, the first sequence is $\vec{u}_{284}$, and the second sequence may be $\vec{u}_{57}$. Alternatively, the first sequence is $\vec{u}_{171}$, and the second sequence may be $\vec{u}_{384}$, and the like. Examples are not enumerated herein.

It may be understood that each sequence in the following Table 1 may be replaced with an equivalent transformed sequence of the sequence. The equivalent transformed sequence may be obtained after a cyclic shift or sign inversion (for example, inverting an element 1 to -1, inverting an element -1 to 1, and keeping an element 0 unchanged) is performed on any sequence in Table 1. It may be further understood that a specific value of the sequence pair shown in Table 1 is merely an example. When n is set to a different value, generated sequence pairs may be different. Any two ternary perfect sequences that satisfy the foregoing formula (2-5) fall within the protection scope of embodiments of this application.

Table 1

| Sequence | Sequence value |
|---|---|
| $\vec{u}_3$ | {1 −1　1　0 −1 −1　0　1　0　0　0 −1 −1 −1 −1　0　0 −1 −1　1 −1 −1　0　0<br><br>1　1　0 −1 −1　0　0　0　1　0　1　0　1　0　0 −1　0　0　0　1　1 −1　0<br><br>0　0 −1 −1　0 −1 −1　0　1　0 −1　0　1　1　1　0　0　0　1　0　0 −1 −1　0<br><br>0　0　1　0　0　0 −1　0　0　0　0　0　0　0　0　1　0　0　0　0 −1　0　0<br><br>0　1 −1　0　0　0　0　1　0　0　1　1 −1　0　0　1　0 −1　0　1　0 −1　1<br><br>0　0　0　0 −1　1　0　1 −1 −1　1　0　1　0　0　1 −1　0 −1 −1 −1　0　0　1<br><br>0　0　0 −1　0　1　0　0　0　0　1　0 −1　0　1 −1　0　1　0　0　1　1　1<br><br>−1　1 −1　0　1　1　0　0　1　0　0　1　0　0　1　0 −1　1　0　1 −1 −1 −1<br><br>1 −1　0　0　1　0　0　1 −1　0　1　0 −1　0　0 −1　1　0　0　1　1　0　0<br><br>0　0　0　0　0 −1　1　0　0　0 −1 −1　0　0　1　0 −1　0　0　0　1　1　0<br><br>1　0　0　1　0　1　1　1 −1 −1　1　1　0 −1　0　0　0　1　0　1　1　0　0<br><br>0 −1　1 −1　0　1　0　1　1　0　0 −1　0 −1　1　0　0 −1 −1　1　1　0　0 |
| | 0　1　1 −1　1 −1　0 −1　1　1　0 −1　0　0　0　0　0　1 −1　0 −1　0 −1　1<br><br>0 −1 −1　0 −1　1 −1　0　1 −1　0　0　0　0 −1　0　1 −1　0 −1　0 −1　1<br><br>−1　1　1　0　1　0 −1　0　1　0 −1　0　0　0　0　0 −1　0　1　0　0　1<br><br>0　1　0　1 −1　1 −1　0　0 −1　0 −1　1　1　0 −1 −1 −1　0　0　0　0　0　0<br><br>1 −1　1　0　0　1　1　1　0　1　0　0　1　0　0　1　1 −1　1　0　1　0 −1<br><br>1 −1　0　1　0　1　0　0　0 −1　0　0 −1　0　0　0　0　1　1　0　0　1 −1<br><br>1　0　0　0　0　1　0 −1 −1　1　1　0 −1 −1　0 −1　1　0　0　1　1　0　1<br><br>0　0　0　0 −1 −1 −1　0 −1 −1 −1　1　0　0　0　0 −1 −1 −1 −1　1　1 −1　1 −<br><br>1　0　0　0　0　0　1　1　1　1　0 −1 −1　1 −1 −1　0　0　0 −1　0　1　1<br><br>1　0　0　1 −1　0　0　1　0　0　0　0　0 −1　0　0　1　0 −1　0　0} |

(continued)

| Sequence | Sequence value |
|---|---|
| $\vec{u}_{341}$ | {1  0  0  0  1  0  0  1  0 –1  0 –1  0 –1  0  1  1  1  0 –1  0  0  1<br>–1 –1  1  0  0  1  1  0  0  0  0  0  1  0  1  1  0  0 –1  1 –1  1  0<br>1 –1  0  0  0 –1 –1 –1  1  0  0  0  1 –1  0  0  1  1  0  0  1  0 –1<br>1  0  0  0  1  0 –1  0  0  0 –1  0  0  0  0  0  0 –1 –1  0  1 –1  1<br>0  1  0 –1 –1  0  1 –1 –1 –1  0 –1  0  1 –1 –1  1  0 –1  1 –1  0  1  1<br>1  0  0 –1  0  0  0  0  1 –1  0  0  0  0  1 –1 –1 –1  1  1 –1  0 –1  1<br>0  1  0  0  1  1  0 –1 –1  0 –1  0 –1 –1  0  0 –1  0  1  0  0  1  0<br>1 –1  0 –1  0  0  0 –1  1  1  1 –1  0 –1 –1 –1  1 –1  0  1  0  1  0 –1<br>0  0 –1  0  0 –1 –1  1  0  1  1  0  1 –1  0  0 –1  0  0  0  1  1  0<br>0  0  1  1  0 –1  1  0  0  0  0 –1  0 –1  0  1  1  0 –1  0  1  0  0<br>1 –1  0  0 –1 –1  1  0  0  0  1  0 –1  1  0  1 –1  0 –1 –1  1  0  0  0<br>0  1  0  0  0  0  1  0  0  1  0  0  0  0  0  1  1  0  0 –1  0  0  1<br>–1  0  0  0 –1  0  0  0  1  0  1  1  1  1  0  0 –1  0  0 –1  0  0  1<br>0 –1  1 –1 –1  1  0  0  0  0  0  1 –1  1  0  0  0  0  0  0  1  0  0<br>0  1  1  1  0  1  1  1  1  0  0  0  0 –1 –1  0  1  0 –1 –1  1  0  0<br>0  1  1 –1  0  0 –1  0  1  0 –1 –1 –1 –1  1 –1  0  1  0  0  0  0  0  0<br>0  1  1 –1 –1  0  1  0  0  1  0  1  0  0  0  0  0  1  0  0  1 –1  0<br>1  0  0  0  0  1  0  1  1  1  0  0 –1  1  0  1  0  1  0  1 –1  0  0<br>0  0  0  0  0  0 –1  0 –1  0  0 –1  1 –1  0  0 –1  1 –1 –1  1  1  0  0<br>0  1  0  0  1 –1  1 –1 –1  0  0  1  0 –1 –1 –1  0 –1  1  0  0 –1 –1  0<br>–1  1 –1 –1 –1 –1  1  1 –1  0  0 –1  1  1  0 –1  0  0  0  1  0  1  0<br>1  0  0  0  0  1 –1  1  0 –1  0 –1  0  0  0  1  1  0 –1  0  0} |
| $\vec{u}_5$ | {0  1  0  0  0  0  1  0  0  0 –1  1  0  0  0  0 –1  0  0 –1  1  1  0<br>0  1  0  1  0  1  0 –1 –1  0  0  0  0  1 –1  0  1 –1  1  1  0 –1  0 |

**15**

(continued)

| Sequence | Sequence value |
|---|---|
| | 0 1 −1 0 1 1 1 0 0 1 0 0 0 −1 0 −1 0 0 0 0 −1 0 1 0 1 1 0 −1 0 0 −1 1 1 −1 −1 1 0 1 −1 0 0 −1 0 0 −1 0 0 1 0 −1 1 0 1 1 1 1 −1 1 0 0 1 0 0 1 1 0 −1 0 −1 0 0 −1 1 0 0 −1 −1 0 0 0 0 0 0 0 1 −1 0 0 0 1 −1 0 0 1 0 1 0 0 0 −1 1 0 1 0 0 −1 0 1 −1 1 1 −1 1 −1 0 1 0 0 0 1 0 −1 1 0 0 0 1 −1 1 0 −1 0 −1 −1 0 0 1 0 1 1 0 0 1 −1 −1 1 0 0 0 1 1 1 −1 1 0 1 −1 −1 0 1 0 0 0 0 0 1 1 0 1 0 1 1 0 1 −1 0 1 −1 −1 0 1 −1 0 0 0 0 0 −1 0 1 1 0 1 0 −1 −1 −1 −1 −1 0 −1 0 −1 0 1 0 −1 0 0 0 0 0 0 1 0 −1 0 0 −1 0 1 0 1 1 1 −1 0 0 1 0 −1 1 − 1 0 −1 1 1 0 0 0 0 0 0 −1 1 1 0 0 −1 1 −1 0 −1 0 0 − 1 0 0 1 1 1 −1 0 1 0 1 −1 −1 0 1 0 −1 0 0 0 1 0 0 − 1 0 0 0 0 1 1 0 0 −1 1 1 0 0 0 0 1 0 1 1 −1 −1 0 1 1 0 1 −1 0 0 1 −1 0 −1 0 0 0 0 1 1 1 0 −1 1 −1 1 0 0 0 0 1 1 −1 −1 −1 −1 −1 1 −1 0 0 0 0 0 −1 1 1 1 0 1 −1 −1 −1 1 0 0 0 1 0 −1 −1 −1 0 0 1 1 0 0 −1 0 0 0 0 0 −1 0 0 1 0 1 0 0 1 1 −1 0 1 1 0 1 0 0 0 1 1 −1 −1 0 0 1 −1 −1 −1 −1 0 0 −1 1 0 −1 −1 0 0 0 −1 0 1 0 −1 0 0 −1 0 0 0 1 −1 1 0 0 0 1 −1 0 −1 −1 0 −1 0 −1 0 −1 1 −1 0 0 0 −1 0 0 −1 −1 0 0 0 1 0 0 0 −1 0 0 0 0 0 0 0} |

| Sequence | Sequence value |
|---|---|
| $\vec{u}_{118}$ | {0   0 –1   0   0   0   1   0 –1   0   1   0   1 –1   1   0   0   0 –1 –1   0   0   0 0 –1   0 –1   1   0   0   0 –1   0   0   0   1   1   0   0   1   0 –1   0   1   1   0 – 1   0   0   0   0 –1   1 –1 –1   0   0   0   0   0   1   0   0 –1 –1   0   0 –1   0 1   0   0   0   0   1   0   1 –1   0   0 –1   0   0   0   1   1   0   1   1   0   0   0 0   1   0   0   1 –1 –1   0   1   1 –1   1 –1   0 –1 –1   1   0   1   0 –1   0   0   0 0 –1   1   1   1 –1   0 –1   0   0   0   0 –1   0 –1   0   0   0   0   1   0   0   0 0   0 –1 –1 –1   1   0   1   0   0 –1   0   0 –1   1   0   0 –1   0 –1   0   1   0   0 1   0   0 –1   1   0 –1   0   0   1   0   1 –1   0   0   0   0   1   0   0   1   1   1 1   0   1   1   0   1   1   0   0   0   0   0 –1   0   1   1   1   0 –1   0   0   1   1 –1 –1 –1   0   0   0   1 –1   1   0 –1   0   1   1 –1   0   0   0 –1   1 –1   1   1 0   0 –1   1   1   0   0 –1 –1   0   0   0 –1   0   0   0   0 –1   0   1 –1   1   1 1   0 –1   0   0 –1 –1   0   0   0   0   1   0   0   0   1 –1   0   0   1 –1   0   0 1   0 –1   0   0   0   0   1   1   0 –1   0   1   0   1   0   0   0   1 –1   1 –1 –1 – 1   1   1 –1   0   0   1   1   0   0   0 –1 –1   0   0   0   0   0 –1   1   1   0   0 – 1   0 –1 –1   1   0   0 –1   0   0   1   1   0   0   1   0   1   1   1   0   1   0   0 –1   1   1 –1   0   1 –1   0   0 –1   0   0   1   0   0   1   1   0 –1   1   0 –1   0 –1   0   0   0 –1   1   0   0 –1   0   0   1   0   1   0   1   0   1 –1   0   0   1 –1 1   1   0   1   1 –1   1 –1   0   1   0 –1   0   0   0   1   0 –1 –1   1   0   0   1 0   1   1   1   1   0   1 –1   1   0 –1   0   0   1   0   1 –1 –1   0 –1   0 –1   0 0   0   0 –1   0 –1   1   1 –1 –1   1 –1   0   1 –1   1   0   0   1   1   1   1 –1   0 0 –1   0   0   0   0 –1 –1   1 –1 –1   1   1   0   1   1   0 –1   0   0 –1 –1   1   0 1 –1   0 –1   0 –1 –1 –1 –1   1   0   0   0   0   0   0 –1   0   0   0   0   0   0 – 1} |

(continued)

| Sequence | Sequence value |
|---|---|
| $\vec{u}_9$ | {1 0 0 0 0 0 0 0 0 0 0 0 0 0 −1 0 0 0 0 1 0 0<br>0 0 0 −1 0 0 0 0 0 0 0 0 0 0 −1 0 0 0 1 0 0 0<br>0 0 0 0 1 0 0 0 0 0 0 0 0 0 0 0 0 0 0 0 0 0<br>0 0 0 0 0 0 0 0 0 0 0 0 0 0 0 0 0 −1 0 1 0 0 0<br>0 0 0 0 0 0 0 0 0 0 0 0 0 0 0 0 0 −1 0 0 0 0 0<br>0 0 1 1 1 0 0 1 0 0 0 1 0 0 0 0 0 0 0 0 0 0 −1<br>1 0 0 0 0 −1 1 0 0 0 0 0 0 0 0 0 1 0 0 −1 0 0 0<br>0 0 −1 0 1 0 0 0 1 0 0 0 0 0 0 0 0 0 0 0 0 0 0<br>0 0 0 0 0 0 0 0 0 0 0 0 0 −1 0 0 0 1 1 0 0 0<br>0 0 0 0 0 −1 0 0 −1 0 0 0 0 0 0 −1 0 0 −1 1 0 1 0<br>0 0 0 0 0 0 0 0 0 0 0 0 0 0 0 1 0 0 0 0 0 −1 0<br>0 0 0 −1 0 0 0 0 0 0 0 0 0 1 0 0 −1 0 0 0 0 0 0<br>0 0 −1 0 0 0 0 0 0 0 0 −1 0 0 0 0 0 0 0 0 0 0 0<br>0 0 0 −1 0 0 0 0 0 0 0 1 0 0 0 0 0 0 −1 0 0 0 0<br>0 0 0 0 1 0 0 0 0 0 0 1 0 0 0 0 0 0 0 0 0 0 0<br>0 0 0 −1 0 0 0 0 0 0 0 0 0 0 0 0 0 0 0 0 0 1 0<br>0 0 0 0 0 0 0 0 0 0 0 0 1 0 0 0 0 0 0 0 0 0 0<br>0 0 0 0 0 0 0 −1 0 0 0 1 0 0 0 0 0 0 −1 0 0 0 0<br>0 0 0 0 0 0 0 0 0 0 0 0 0 0 0 0 0 0 0 0 0 0 0<br>0 0 0 0 0 0 0 0 −1 1 0 0 0 0 0 0 0 0 0 0 0 0 0<br>0 1 0 1 0 1 0 0 0 0 0 1 0 0 1 0 0 0 0 1 0 0<br>0 0 0 0 0 0 0 0 0 0 0 0 0 0 0 0 0 0 0 −1 0 1 0<br>0 0 0 −1 0 0 0 0 −1 0 1} |
| $\vec{u}_{260}$ | {0 0 0 0 0 0 0 0 1 0 0 0 0 0 0 0 0 0 0 0 0 0<br>1 0 0 0 0 0 0 0 0 0 0 0 0 0 0 0 0 −1 0 0 0 1 0 |

(continued)

| Sequence | Sequence value |
|---|---|
| | 0 0 0 0 0 −1 0 0 0 0 0 0 0 0 0 0 0 0 0 0 0 0 0 |
| | 0 0 0 0 0 0 0 0 0 0 0 0 0 0 0 0 0 −1 1 0 0 0 0 |
| | 0 0 0 0 0 0 0 0 0 0 1 0 1 0 1 0 0 0 0 0 1 0 |
| | 0 1 0 0 0 0 1 0 0 0 0 0 0 0 0 0 0 0 0 0 0 0 |
| | 0 0 0 0 0 0 −1 0 1 0 0 0 0 −1 0 0 0 0 −1 0 1 1 0 |
| | 0 0 0 0 0 0 0 0 0 0 0 0 −1 0 0 0 0 1 0 0 0 0 0 |
| | −1 0 0 0 0 0 0 0 0 0 0 0 −1 0 0 0 1 0 0 0 0 0 |
| | 0 0 1 0 0 0 0 0 0 0 0 0 0 0 0 0 0 0 0 0 0 0 |
| | 0 0 0 0 0 0 0 0 0 0 0 0 0 0 0 −1 0 1 0 0 0 0 0 |
| | 0 0 0 0 0 0 0 0 0 0 0 0 0 0 0 −1 0 0 0 0 0 0 0 |
| | 1 1 1 0 0 1 0 0 0 1 0 0 0 0 0 0 0 0 0 0 −1 1 0 |
| | 0 0 0 −1 1 0 0 0 0 0 0 0 0 0 1 0 0 −1 0 0 0 0 0 |
| | −1 0 1 0 0 0 1 0 0 0 0 0 0 0 0 0 0 0 0 0 0 0 |
| | 0 0 0 0 0 0 0 0 0 0 0 0 0 −1 0 0 0 1 1 0 0 0 0 |
| | 0 0 0 0 −1 0 0 −1 0 0 0 0 0 0 −1 0 0 −1 1 0 1 0 0 |
| | 0 0 0 0 0 0 0 0 0 0 0 0 0 0 0 1 0 0 0 0 0 −1 0 0 |
| | 0 0 −1 0 0 0 0 0 0 0 0 0 1 0 0 −1 0 0 0 0 0 0 0 |
| | 0 −1 0 0 0 0 0 0 0 0 −1 0 0 0 0 0 0 0 0 0 0 0 0 0 |
| | 0 0 −1 0 0 0 0 0 0 0 1 0 0 0 0 0 0 −1 0 0 0 0 0 |
| | 0 0 0 1 0 0 0 0 0 0 1 0 0 0 0 0 0 0 0 0 0 0 0 |
| | 0 0 −1 0 0 0 0 0 0 0 0 0} |

(continued)

| Sequence | Sequence value |
|---|---|
| $\vec{u}_{17}$ | {1  0  0 –1  0  1 –1  0 –1 –1  1  1 –1  1  0  0  1  0  0 –1 –1  0 –1<br>0 –1  0  0  1  1  0  0 –1  1  0  0  0  0  0  0  0 –1 –1  0  0  0  1<br>1  0  0  1  0 –1  0  0  0 –1  1  0  1  0  0  1  0 –1 –1  1 –1 –1  1<br>1  0 –1  0  0  0  1  0 –1  1  0  0  0  1  1  1  0  1  0  1  1  0  0<br>1  0 –1 –1  0  0  1  1  1 –1  0  0  0 –1 –1 –1  1  1  0  1  1 –1  0  1<br>0  0  0  0  0  1 –1  0  1  0  1 –1  0 –1 –1  0 –1 –1  1  0 –1 –1  0  0<br>0  0  0  1  0  1 –1  0  1  0  1 –1  1  1 –1  0  1  0  1  0 –1  0  1<br>0  0  0  0  0  0 –1  0 –1  0  0 –1  0 –1  0 –1  1 –1  1  0  0 –1  0 –1<br>1  1  0  1 –1  1  0  0  0  0  0 –1  1  1  0  0  1  1  1  0 –1  0<br>0  1  0  0 –1 –1  1 –1  0  1  0 –1 –1 –1  0  1  0  1  0  0  0 –1  0  0<br>1  0  0  0  0  1  1  0  0 –1 –1  1  0  0  0  0  1  0  1  1  1  1  0<br>1 –1  0  1  1  0  0 –1  1  0  1  0  0  0  0 –1  1  1  0 –1 –1  1 –1<br>0  0  0  0 –1  1  1  1 –1  1  1 –1  1  0  0  0  0  0 –1 –1 –1 –1  0 –1 |
| | –1  1  1  1  0  0  0  1  0  1  1 –1  0  0 –1  1  0  0 –1  0  0  0  0<br>0  1  0  0  1  0 –1  0  0  1  1  1  0 –1  1  0 –1  0  0  0 –1  1 –1<br>1  0  0 –1  1 –1  1  1  0  0 –1 –1  0 –1  1  0  0  0  1  0 –1  0 –1  0<br>0  1  0  0  0  1  1 –1  0  0  0  1  1  0  1  1  0 –1  0  1  0  1 –1<br>–1  0  0  0  1  0  0  1  1  0  0  0 –1  0  0  0  1  0  0  0  0  0<br>0  0  0  1  0  0  0  0 –1  0  0  0 –1 –1  0  0  0  0 –1  0  0 –1 –1 –1<br>0  0 –1  0  1  0 –1  0  1 –1  0  0  0  0 –1 –1  0 –1 –1 –1  1  0  1  0<br>0 –1  1  0 –1  1  1  0  0 –1  0  0  0  1  0 –1  0  0  0  0 –1  0  1<br>0  1 –1  0 –1  0  0  1 –1  1 –1  1 –1  0  1 –1  0  0  1  0  0} |

(continued)

| Sequence | Sequence value |
|---|---|
| $\vec{u}_{229}$ | {0  0 –1  0  0  0  0  1 –1  0  0  0 –1  1  0  0  0  0 –1  1  0  0  0 <br> –1 –1  1  0  1  1 –1 –1 –1  0  0  0 –1  0  0 –1  0 –1  0  0  0  1  0 <br> 0  1 –1 –1  0 –1  0  1  1  1  0  0  0  0  1  0  0 –1  0 –1  1  0  1 <br> 0 –1  0 –1  1 –1  0  0  0  0  0  0 –1  1  0  1  0 –1  0  1  1 –1 <br> 1 –1  1  0  0  0  1  0  0  0  0  0  0 –1  0  0  0  1  0  0  1  0  0 <br> 1  0 –1  1  1 –1 –1  0 –1  0  0  0  0  0  1 –1 –1  1  1  0  0  0 –1 –1 <br> 0  0  0  1  0  0  0  0  1  1 –1  1 –1 –1  0  0  0  0  0 –1  0  1  0 <br> 0  1 –1  1 –1 –1  0  0  1 –1  1  0 –1  0  0  0  0  1 –1 –1  0  0  0  0 <br> 0  1  1 –1  0 –1  0  0  0  1 –1  0  0  1 –1 –1  0  1  0  1 –1  1  1 <br> 1  1  1  1  1  0  1  0  0  1  1  1  0  0  0  0  1 –1  1 –1  1  0  0 <br> 0  0  1  0  0  0  1  1 –1 –1 –1  1 –1 –1  1  1 –1  0 –1  0  1  0  1  0 <br> 1  1  0  0  1  0  0  0  0  1  0  1  0 –1  1 –1  1 –1  0  1  1 –1  0 – <br> 1  1  1  0  1  0 –1  0  0 –1 –1  0  0 –1  1  0  0 –1  1 –1  0  0  1 <br> 0  1 –1  0  0  0  0  1  0  0  0  0  1  0 –1  0  0  1  0  0  0  1 –1 <br> 0  1 –1  0  1  0 –1  0  1  0 –1 –1  0  1  1  0  1  0 –1  0  0 –1 –1 –1 <br> 1  1  1  0  0  1  1  1  0 –1 –1 –1  0 –1  0  0 –1  0 –1  0  0 –1  0  0 <br> –1  0  1 –1  0  0  0 –1 –1  0  1  0 –1  0  0  1  0  0  1  0  0  1  1 <br> –1 –1 –1  0  0  0 –1  0  0  0  1  1  1  0  1  0  0  0  0  0  0  1  0 <br> 0  1 –1  0  0  0 –1  1  0 –1  0  1  0  0  1  1 –1  0 –1  1 <br> 0 –1 –1  0  1  1 –1  0  0 –1  0  0  0  1  0  0 –1  0 –1  0  0 –1  1 <br> 1  1  0  0  1  1  0  0 –1 –1  0  0  1  0  1 –1 –1 –1  1 –1 –1  1  1  1 <br> 0  1  0  0  0  0  1  1  0  1  0  1  0  0 –1  0 –1  0 –1 –1} |
| $\vec{u}_{33}$ | {1  1  1  0 –1  0  0  1  0  0 –1 –1  1 –1  0  1  0 –1 –1 –1  0  1  0 <br> 1  0  0  0 –1  0  0  1  0  0  0  0  1  1  0  0 –1 –1  1  0  0  0  0 <br> 1  0  1  1  1  1  0  1 –1  0  1  1  0  0 –1  1  0  1  0  0  0  0 –1 |

(continued)

| Sequence | Sequence value |
|---|---|
| | 1 1 0 –1 –1 1 –1 0 0 0 0 –1 1 1 1 –1 1 1 –1 1 0 0 0 0 0 –1 –1 –1 –1 0 –1 –1 1 1 1 0 0 0 1 0 1 1 –1 0 0 –1 1 0 0 –1 0 0 0 0 0 1 0 0 1 0 –1 0 0 1 1 1 0 –1 1 0 –1 0 0 0 –1 1 –1 1 0 0 –1 1 –1 1 1 0 0 –1 –1 0 –1 1 0 0 0 1 0 –1 0 –1 0 0 1 0 0 0 1 1 –1 0 0 0 1 1 0 1 1 0 –1 0 1 0 1 –1 –1 0 0 0 1 0 0 1 1 0 0 0 –1 0 0 0 1 0 0 0 0 0 0 0 1 0 0 0 0 –1 0 0 0 –1 –1 0 0 0 0 –1 0 0 –1 –1 –1 0 0 –1 0 1 0 –1 0 1 –1 0 0 0 0 –1 –1 0 –1 –1 –1 1 0 1 0 0 –1 1 0 –1 1 1 0 0 –1 0 0 0 1 0 –1 0 0 0 0 –1 0 1 0 1 –1 0 –1 0 0 1 –1 1 –1 1 –1 0 1 –1 0 0 1 0 0 1 0 0 –1 0 1 –1 0 –1 –1 1 1 –1 1 0 0 1 0 0 – 1 –1 0 –1 0 –1 0 0 1 1 0 0 –1 1 0 0 0 0 0 0 0 –1 –1 0 0 0 1 1 0 0 1 0 –1 0 0 0 –1 1 0 1 0 0 1 0 –1 –1 1 –1 –1 1 1 0 –1 0 0 0 1 0 –1 1 0 0 0 1 1 1 0 1 0 1 1 0 0 1 0 –1 –1 0 0 1 1 1 –1 0 0 0 –1 –1 –1 1 1 0 1 1 –1 0 1 0 0 0 0 0 1 –1 0 1 0 1 –1 0 –1 –1 0 –1 –1 1 0 –1 –1 0 0 0 0 0 1 0 1 –1 0 1 0 1 –1 1 1 –1 0 1 0 1 0 –1 0 1 0 0 0 0 0 0 –1 0 –1 0 0 –1 0 –1 0 –1 1 –1 1 0 0 –1 0 –1 1 1 0 1 –1 1 0 0 0 0 0 –1 1 1 0 0} |

| Sequence | Sequence value |
|---|---|
| $\vec{u}_{370}$ | {0 –1  0  1  0  0  1  1 –1  0  0 –1  1  0 –1 –1  0  1  1 –1  0  0 –1  0  0  0  1  0  0  0 –1  0 –1  0  0 –1  1  1  1  0  0  1  1  0  0 –1 – 1  0  0  1  0  1 –1 –1 –1  1 –1 –1  1  1  1  0  1  0  0  0  0  1  1  0  1  0  1  0  0  0 –1  0 –1  0 –1 –1  0  0 –1  0  0  0  0  1 –1  0  0  0 –1  1  0  0  0  0 –1  1  0  0  0 –1 –1  1  0  1  1 –1 –1 –1  0  0  0 –1  0  0 –1  0 –1  0  0  0  1  0  0  1 –1 –1  0 –1  0  1  1  1  0  0  0  0  1  0  0 –1  0 –1  1  0  1  0 –1  0 –1  1 –1  0  0  0  0  0  0 –1  1  0  1  0 –1  0  1  1 –1  1 –1  1  0  0  0  1  0  0  0  0  0  0 –1  0  0  0  1  0  0  1  0  0  1  0 –1  1  1 –1 –1  0 –1  0  0  0  0  0  1 –1 –1  1  1  0  0  0 –1 –1  0  0  0  1  0  0  0  0  1  1 – 1  1 –1 –1  0  0  0  0  0 –1  0  1  0  0  1 –1  1 –1 –1  0  0  1 –1  1  0 –1  0  0  0  0  1 –1 –1  0  0  0  0  0  1  1 –1  0 –1  0  0  0  1 – 1  0  0  1 –1 –1  0  1  0  1 –1  1  1  1  1  1  1  1  0  1  0  0  1  1  1  0  0  0  0  1 –1  1 –1  1  0  0  0  0  1  0  0  0  1  1 –1 –1 – 1  1 –1 –1  1  1 –1  0 –1  0  1  0  1  0  1  1  0  0  1  0  0  0  0 |
| | 1  0  1  0 –1  1 –1  1 –1  0  1  1 –1  0 –1  1  1  0  1  0 –1  0  0 –1 –1  0  0 –1  1  0  0 –1  1 –1  0  0  1  0  1 –1  0  0  0  0  1  0  0  0  0  1  0 –1  0  0  1  0  0  0  1 –1  0  1 –1  0  1  0 –1  0  1  0 – 1 –1  0  1  1  0  1  0 –1  0  0 –1 –1 –1  1  1  1  0  0  1  1  1  0 – 1 –1 –1  0 –1  0  0 –1  0 –1  0  0 –1  0  0 –1  0  1 –1  0  0  0 –1 –1  0  1  0 –1  0  0  1  0  0  1  0  0  1  1 –1 –1 –1  0  0  0 –1  0  0  0  1  1  1  0  1  0  0  0  0  0  0  1  0  0  1 –1  0  0  0  0 –1  1  0} |

(continued)

| Sequence | Sequence value |
|---|---|
| $\vec{u}_{65}$ | {1 0 0 0 0 0 0 0 0 0 0 0 0 0 0 1 0 1 0 1 0 0<br>0 0 0 1 0 0 1 0 0 0 0 1 0 0 0 0 0 0 0 0 0 0<br>0 0 0 0 0 0 0 0 0 0 0 −1 0 1 0 0 0 0 −1 0 0 0 0<br>−1 0 1 1 0 0 0 0 0 0 0 0 0 0 0 0 0 −1 0 0 0 0<br>1 0 0 0 0 0 −1 0 0 0 0 0 0 0 0 0 0 −1 0 0 0 1<br>0 0 0 0 0 0 0 1 0 0 0 0 0 0 0 0 0 0 0 0 0 0<br>0 0 0 0 0 0 0 0 0 0 0 0 0 0 0 0 0 0 0 −1 0 1<br>0 0 0 0 0 0 0 0 0 0 0 0 0 0 0 0 0 0 0 −1 0 0<br>0 0 0 0 0 1 1 1 0 0 1 0 0 0 1 0 0 0 0 0 0 0<br>0 0 0 −1 1 0 0 0 0 −1 1 0 0 0 0 0 0 0 0 0 1 0 0<br>−1 0 0 0 0 0 −1 0 1 0 0 0 1 0 0 0 0 0 0 0 0 0<br>0 0 0 0 0 0 0 0 0 0 0 0 0 0 0 0 0 0 0 −1 0 0 0<br>1 1 0 0 0 0 0 0 0 0 −1 0 −1 0 0 0 0 0 −1 0 0<br>−1 1 0 1 0 0 0 0 0 0 0 0 0 0 0 0 0 0 0 0 1 0<br>0 0 0 0 −1 0 0 0 0 −1 0 0 0 0 0 0 0 0 0 1 0 0 −1<br>0 0 0 0 0 0 0 0 −1 0 0 0 0 0 0 0 0 −1 0 0 0 0 0<br>0 0 0 0 0 0 0 0 0 −1 0 0 0 0 0 0 0 1 0 0 0 0 0<br>0 −1 0 0 0 0 0 0 0 0 1 0 0 0 0 0 0 1 0 0 0 0 0<br>0 0 0 0 0 0 0 0 −1 0 0 0 0 0 0 0 0 0 0 0 0 0 0<br>0 0 0 1 0 0 0 0 0 0 0 0 0 0 0 0 0 0 1 0 0 0 0<br>0 0 0 0 0 0 0 0 0 0 0 0 −1 0 0 0 1 0 0 0 0 0 0<br>−1 0 0 0 0 0 0 0 0 0 0 0 0 0 0 0 0 0 0 0 0 0 0<br>0 0 0 0 0 0 0 0 0 0 0 0 0 −1} |
| $\vec{u}_{288}$ | {0 0 0 0 0 −1 0 0 −1 1 0 1 0 0 0 0 0 0 0 0 0 0 0<br>0 0 0 0 0 0 1 0 0 0 0 −1 0 0 0 −1 0 0 0 0 0<br>0 0 0 0 1 0 0 −1 0 0 0 0 0 0 0 −1 0 0 0 0 0 0 |

(continued)

| Sequence | Sequence value |
|---|---|
| | 0 0 −1 0 0 0 0 0 0 0 0 0 0 0 0 0 0 −1 0 0 0 0 0 |
| | 0 0 1 0 0 0 0 0 0 −1 0 0 0 0 0 0 0 0 1 0 0 0 0 |
| | 0 0 1 0 0 0 0 0 0 0 0 0 0 0 0 −1 0 0 0 0 0 0 |
| | 0 0 0 0 0 0 0 0 0 0 0 1 0 0 0 0 0 0 0 0 0 0 |
| | 0 0 0 1 0 0 0 0 0 0 0 0 0 0 0 0 0 0 0 −1 0 0 |
| | 0 1 0 0 0 0 0 0 −1 0 0 0 0 0 0 0 0 0 0 0 0 0 |
| | 0 0 0 0 0 0 0 0 0 0 0 0 0 0 0 0 0 0 0 −1 1 0 |
| | 0 0 0 0 0 0 0 0 0 0 0 0 0 1 0 1 0 1 0 0 0 0 |
| | 0 1 0 0 1 0 0 0 0 1 0 0 0 0 0 0 0 0 0 0 0 0 |
| | 0 0 0 0 0 0 0 0 0 −1 0 1 0 0 0 0 −1 0 0 0 0 −1 0 |
| | 1 1 0 0 0 0 0 0 0 0 0 0 0 0 0 −1 0 0 0 0 1 0 0 |
| | 0 0 0 −1 0 0 0 0 0 0 0 0 0 0 0 −1 0 0 0 1 0 0 0 |
| | 0 0 0 0 1 0 0 0 0 0 0 0 0 0 0 0 0 0 0 0 0 0 |
| | 0 0 0 0 0 0 0 0 0 0 0 0 0 0 0 0 0 −1 0 1 0 0 0 |
| | 0 0 0 0 0 0 0 0 0 0 0 0 0 0 0 0 0 −1 0 0 0 0 0 |
| | 0 0 1 1 1 0 0 1 0 0 0 1 0 0 0 0 0 0 0 0 0 0 −1 |
| | 1 0 0 0 0 −1 1 0 0 0 0 0 0 0 0 0 1 0 0 −1 0 0 0 |
| | 0 0 −1 0 1 0 0 0 1 0 0 0 0 0 0 0 0 0 0 0 0 0 0 |
| | 0 0 0 0 0 0 0 0 0 0 0 0 0 0 −1 0 0 0 1 1 0 0 0 |
| | 0 0 0 0 0 −1 0 0 −1 0} |

| Sequence | Sequence value |
|---|---|
| $\vec{u}_{129}$ | {0　0　0　0 –1　1　1　1　0　1 –1 –1 –1　1　0　0　0　1　0 –1 –1 –1　0　0　1　1　0　0 –1　0　0　0　0　0 –1　0　0　1　0　1　0　0　1　1 –1　0　1　1　0　1　0　0　0　1　1 –1 –1　0　0　1 –1 –1 –1 –1　0　0 –1　1　0 –1 –1　0　0　0 –1　0　1　0 –1　0　0 –1　0　0　0　1 –1　1　0　0　0　1 –1　0 –1 –1　0 –1　0 –1　0 –1　1 –1　0　0　0 –1　0　0 –1 –1　0　0　0　1　0　0　0 –1　0　0　0　0　0　0　0　1　0　0　0　0　1　0　0　0 –1　1　0　0　0　0 –1　0　0 –1　1　1　0　0　1　0　1　0　1　0 –1 –1　0　0　0　0　1 –1　0　1 –1　1　1　0 –1　0　0　1 –1　0　1　1　1　0　0　1　0　0　0 – 1　0 –1　0　0　0　0 –1　0　1　0　1　1　0 –1　0　0 –1　1　1 –1 –1　1　0　1 –1　0　0 –1　0　0 –1　0　0　1　0 –1　1　0　1　1　1　1 –1　1　0　0　1　0　0　1　1　0 –1　0 –1　0 –1　1　0　0 –1 –1　0　0　0　0　0　0　0　1 –1　0　0　0　1 –1　0　0　1　0　1　0　0　0 –1　1　0　1　0　0 –1　0　1 –1　1　1 –1　1 –1　0　1　0　0　0　1　0 –1　1　0　0　0　1 –1　1　0 –1　0 –1 –1　0　0　1　0　1　1　0　0　1 –1 –1　1　0　0　0　1　1 |
|  | 1 –1　1　0　1 –1 –1　0　1　0　0　0　0　0　1　1　0　1　0　1　1　0　1 –1　0　1 –1 –1　0　1 –1　0　0　0　0　0 –1　0　1　1　0　1　0 –1 –1 –1 – 1 –1　0 –1　0 –1　0　1　0 –1　0　0　0　0　0　0　1　0 –1　0　0 –1　0 1　0　1　1　1 –1　0　0　1　0 –1　1 –1　0 –1　1　1　0　0　0　0　0 0 – 1　1　1　0　0 –1　1 –1　0 –1　0　0 –1　0　0　1　1　1 –1　0　1　0　1 – 1 –1　0　1　0 –1　0　0　0　1　0　0 –1　0　0　0　0　1　1　0　0 –1　1 1　0　0　0　0　1　0　1　1 –1 –1　0　1　1　0　1 –1　0　0　1 –1　0 –1 0　0　0　0　1　1　1　0 –1　1 –1　1　0　0　0　0　1　1 –1 –1 –1 –1 –1　1 –1　0} |

(continued)

| Sequence | Sequence value |
|---|---|
| $\vec{u}_{355}$ | {0 0 –1 0 0 1 0 1 0 1 0 1 –1 0 0 1 –1 1 1 0 1 1 –1 1 –1 0 1 0 –1 0 0 0 1 0 –1 –1 1 0 0 1 0 1 1 1 1 0 1 –1 1 0 –1 0 0 1 0 1 –1 –1 0 –1 0 –1 0 0 0 0 –1 0 –1 1 1 –1 –1 1 –1 0 1 –1 1 0 0 1 1 1 1 –1 0 0 –1 0 0 0 0 –1 –1 1 –1 –1 1 1 0 1 1 0 –1 0 0 –1 –1 1 0 1 –1 0 –1 0 –1 –1 –1 –1 1 0 0 0 0 0 0 –1 0 0 0 0 0 0 –1 0 0 –1 0 0 0 1 0 –1 0 1 0 1 –1 1 0 0 0 –1 –1 0 0 0 0 –1 0 –1 1 0 0 0 –1 0 0 0 1 1 0 0 1 0 –1 0 1 1 0 –1 0 0 0 0 –1 1 –1 –1 0 0 0 0 0 1 0 0 –1 –1 0 0 –1 0 1 0 0 0 0 1 0 1 –1 0 0 –1 0 0 0 1 1 0 1 1 0 0 0 0 1 0 0 1 –1 –1 0 1 1 –1 1 –1 0 –1 –1 1 0 1 0 –1 0 0 0 0 –1 1 1 1 – 1 0 –1 0 0 0 0 –1 0 –1 0 0 0 0 1 0 0 0 0 0 –1 –1 –1 1 0 1 0 0 –1 0 0 –1 1 0 0 –1 0 –1 0 1 0 0 1 0 0 –1 1 0 –1 0 0 1 0 1 –1 0 0 0 0 1 0 0 1 1 1 1 0 1 1 0 1 1 0 0 0 0 0 –1 0 1 1 1 0 –1 0 0 1 1 –1 –1 –1 0 0 0 1 –1 1 0 –1 0 1 1 –1 0 0 0 –1 1 –1 1 1 0 0 –1 1 1 0 0 –1 –1 0 0 0 –1 0 0 0 0 –1 0 1 –1 1 1 1 0 –1 0 0 –1 –1 0 0 0 0 1 0 0 0 1 –1 0 0 1 –1 0 0 1 0 –1 0 0 0 0 1 1 0 –1 0 1 0 1 0 0 0 1 –1 1 –1 –1 –1 1 1 –1 0 0 1 1 0 0 0 –1 –1 0 0 0 0 0 –1 1 1 0 0 –1 0 –1 –1 1 0 0 –1 0 0 1 1 0 0 1 0 1 1 1 0 1 0 0 –1 1 1 –1 0 1 –1 0 0 –1 0 0 1 0 0 1 1 0 –1 1 0 –1 0 –1 0 0 0 0 – 1 1} |
| $\vec{u}_{257}$ | {1 1 –1 0 0 0 –1 –1 0 –1 –1 0 1 0 –1 0 1 1 1 0 0 0 1 0 0 –1 –1 0 0 0 1 0 0 0 –1 0 0 0 0 0 0 0 0 0 1 0 0 |

(continued)

| Sequence | Sequence value |
|---|---|
| | 0  0 −1  0  0  0  1 −1  0  0  0  0  1  0  0  1  1 −1  0  0  1  0 −1  0  1  0 −1  1  0  0  0  0 −1  1  0  1 −1 −1  1  0  1  0  0  1 −1  0 −1 −1 −1  0  0  1  0  0  0 −1  0  1  0  0  0  0  1  0 −1  0  1 −1  0  1  0  0  1  1  1 −1  1 −1  0  1  1  0  0  1  0  0  1  0  0  1  0 −1  1  0  1 −1 −1 −1  1 −1  0  0  1  0  0  1 −1  0  1  0 −1  0  0 −1  1  0  0  1  1  0  0  0  0  0  0  0 −1  1  0  0  0 −1 −1  0  0  1  0 −1  0  0  0  1  1  0  1  0  0  1  0  1  1  1 −1 −1  1  1  0 −1  0  0  0  1  0  1  1  0  0  0 −1  1 −1  0  1  0  1  1  0  0 −1  0 −1  1  0  0 −1 −1  1  1  1  0  0  0  1  1 −1  1 −1  0 −1  1  1  0 −1  0  0  0  0  0  1 −1  0 −1  0 −1  1  0 −1 −1  0 −1  1 −1  0  1 −1  0  0  0  0  0 −1  0  1 −1  0 −1  0 −1  1 −1  1  1  0  1  0 −1  0  1  0 −1  0  0  0  0  0  0 −1  0  1  0  0  1  0  1  0  1 −1  1 −1  0  0 −1  0 −1  1  1  0 −1 −1 −1  0  0  0  0  0  0  1 −1  1  0  0  1  1  1  0  1  0  0  1  0  0  1  1 −1  1  0  1  0 −1  1 −1  0  1  0  1  0  0  0 −1  0  0 −1  0  0  0  0  1  1  0  0  1 −1  1  0  0  0  0  1  0 −1 −1  1  1  0 −1 −1  0 −1  1  0  0  1  1  0  1  0  0  0  0 −1 −1 −1  0 −1 −1 −1  1  0  0  0  0 −1 −1 −1 −1  1  1 −1  1 −1  0  0  0  0  0  1  1  1  1  0 −1 −1  1 −1 −1  0  0  0 −1  0  1  1  1  0  0  1 −1  0  0  1  0  0  0  0  0 −1  0  0  1  0 −1  0  0  1 −1  1  0 −1 −1  0  1  0  0  0 −1 −1 −1 −1  0  0 −1 −1  1 −1 −1  0  0  1  1  0 −1 −1  0  0  0  1  0  1  0  1  0  0 −1  0  0  0} |

| Sequence | Sequence value |
|---|---|
| $\vec{u}_{342}$ | {1  0 –1 –1  0  1 –1 –1 –1  0 –1  0  1 –1 –1  1  0 –1  1 –1  0  1  1  1  0  0 –1  0  0  0  0  1 –1  0  0  0  0  1 –1 –1 –1  1  1 –1  0 –1  1  0  1  0  0  1  1  0 –1 –1  0 –1  0 –1 –1  0  0 –1  0  1  0  0  1  0  1 –1  0 –1  0  0  0 –1  1  1  1 –1  0 –1 –1 –1  1 –1  0  1  0  1  0 –1  0  0 –1  0  0 –1 –1  1  0  1  1  0  1 –1  0  0 –1  0  0  0  1  1  0  0  0  1  1  0 –1  1  0  0  0  0 –1  0 –1  0  1  1  0 –1  0  1  0  0  1 –1  0  0 –1 –1  1  0  0  0  1  0 –1  1  0  1 –1  0 –1 –1  1  0  0  0  0  1  0  0  0  0  1  0  0  1  0  0  0  0  0  1  1  0  0 –1  0  0  1 –1  0  0  0 –1  0  0  0  1  0  1  1  1  1  0  0 –1  0  0 –1  0  0  1  0 –1  1 –1 –1  1  0  0  0  0  0  1 –1  1  0  0  0  0  0  0  1  0  0  0  1  1  1  0  1  1  1  1  0  0  0  0 –1 –1  0  1  0 –1 –1  1  0  0  0  1  1 –1  0  0 –1  0  1  0 –1 –1 –1 –1  1 –1  0  1  0  0  0  0  0  0  0  1  1 –1 –1  0  1  0  0  1  0  1  0  0  0  0  0  1  0  0  1 –1  0  1 |
|  | 0  0  0  0  1  0  1  1  1  0  0 –1  1  0  1  0  1  0  1 –1  0  0  0  0  0  0  0  0 –1  0 –1  0  0 –1  1 –1  0  0 –1  1 –1 –1  1  1  0  0  0  1  0  0  1 –1  1 –1 –1  0  0  1  0 –1 –1 –1  0 –1  1  0  0 –1 –1  0 –1  1 –1 –1 –1 –1  1  1 –1  0  0 –1  1  1  0 –1  0  0  0  1  0  1  0  1  0  0  0  0  1 –1  1  0 –1  0 –1  0  0  0  1  1  0 –1  0  0  1  0  0  0  1  0  0  1  0 –1  0 –1  0 –1  0  1  1  1  0 –1  0  0  1 –1 –1  1  0  0  1  1  0  0  0  0  0  1  0  1  1  0  0 –1  1 –1  1  0  1 –1  0  0  0 –1 –1 –1  1  0  0  0  1 –1  0  0  1  1  0  0  1  0 –1  1  0  0  0  1  0 –1  0  0 –1  0  0  0  0  0 –1 –1  0  1 –1  1  0} |

EP 4 664 155 A1

(continued)

| Sequence | Sequence value |
|---|---|
| $\vec{u}_{409}$ | {0 −1 0 1 1 0 1 −1 1 0 0 1 −1 1 0 0 1 1 0 −1 0 1 0 0 −1 0 0 1 −1 −1 0 1 −1 0 0 0 −1 1 0 1 −1 0 1 −1 0 0 1 1 0 0 0 0 0 −1 0 0 0 0 1 1 1 −1 0 −1 −1 0 0 1 0 −1 0 0 −1 0 −1 0 −1 −1 1 1 −1 0 1 1 0 −1 0 0 −1 1 0 −1 0 0 1 0 1 1 0 1 −1 0 1 0 −1 0 1 0 0 0 0 −1 1 0 0 0 −1 0 0 0 −1 1 0 1 0 1 1 −1 1 0 −1 −1 −1 −1 −1 0 0 0 0 1 −1 0 −1 −1 −1 0 −1 0 1 −1 −1 0 1 −1 −1 0 1 −1 0 −1 −1 1 1 1 −1 −1 0 0 0 1 0 1 0 0 1 −1 0 0 −1 0 1 −1 1 1 0 0 0 −1 1 0 0 0 0 1 0 0 0 1 0 1 1 0 0 1 −1 −1 −1 0 0 1 1 0 0 −1 −1 0 −1 1 0 0 0 0 0 0 1 0 0 −1 −1 1 −1 0 1 0 1 0 1 −1 1 0 0 0 1 0 0 −1 0 1 0 0 0 1 −1 0 0 1 1 1 0 −1 0 1 0 0 0 −1 0 −1 0 −1 0 −1 0 −1 1 0 1 0 0 0 0 0 1 1 0 −1 0 0 0 −1 −1 −1 1 −1 1 0 0 −1 0 0 1 1 0 −1 1 −1 1 0 0 1 0 −1 0 −1 0 0 1 1 −1 −1 −1 0 0 −1 −1 −1 −1 1 −1 1 −1 1 0 −1 1 −1 0 0 0 0 1 0 −1 1 1 0 0 1 0 0 0 0 0 1 0 −1 −1 0 1 0 −1 −1 0 0 0 1 0 −1 −1 1 1 1 1 0 1 0 0 0 0 −1 0 1 0 0 0 0 0 0 0 0 1 1 0 0 1 0 0 0 −1 1 1 0 0 1 0 1 1 0 0 0 0 1 −1 −1 0 −1 −1 −1 −1 0 1 0 0 1 −1 1 0 0 0 0 0 −1 1 −1 0 0 0 −1 1 1 1 0 0 0 0 0 0 0 1 0 1 0 −1 1 0 0 1 0 0 −1 0 −1 −1 1 0 −1 0 0 0 1 0 0 1 1 0 0 0 1 1 −1 0 1 0 0 −1 0 0 0 0 1 0 0 1 0 0 −1 0 0 0 1 0 0 0 0 0 0 1 1 1 −1 1} |
| $\vec{u}_{13}$ | {0 0 1 −1 1 1 −1 1 0 1 1 −1 0 1 0 0 1 1 0 0 1 0 0 0 0 1 0 1 0 0 −1 1 0 0 1 0 1 0 0 0 0 0 0 0 −1 −1 1 −1 −1 1 0 1 0 0 1 1 0 0 0 1 0 −1 −1 0 0 0 0 0 0 |

(continued)

| Sequence | Sequence value |
|---|---|
|  | 0 –1  0  0  0  1  0  0  0 –1  0 –1 –1  0  1  0  0  1  1  0  0  1 –1  0 –1  0  1  1  0  0  0  0  0  1  0  0  0 –1  0  0  1  0 –1 –1 –1  0  0  1 –1  0 –1  1  1  1 –1  1  0  1  0  0  0  1  1  0  1  0  0  0  0  0  0 –1 –1  1  1  0  1  0  1 –1  0  0  0  0  0  0  0  0  0 –1  1  0  1  0 –1 –1  1  0  0  0  0 –1  0  0 –1  0  1  0  1  1  1  1  0  1  0  0  0  0 –1  1  0  0 –1  0  0  0 –1  0  0 –1  0  0  0  0 –1  1  1  1  0  0  0 –1  0 –1  0  0  0 –1  0  0  1  1  0 –1 –1  0 –1  0  1 –1  0  0 –1  0  0  1 –1 –1  1 –1  1  1  0 –1  0  1 –1  1 –1  0 –1 –1 –1  0 –1  1 –1 –1  0  1  0 –1  0  0  1 –1  1 –1 –1 –1 –1  0  0 –1  0  1  1 –1 –1 –1  1  0  1  1 –1  0  1 –1  0  0  1  0  1  1 –1 –1  0  1  1 –1  0 –1  0 –1  1 –1  1  0  0  0  0 –1  1  0  0  1  0  1  0 –1  0 –1  1 –1  0  1  1  0  0  1  0  1 –1 –1  1  0  0  1  0 –1  1  0  0  0  1  1  0  0  0  1  0  1  0 –1  0 –1  0  0  0  1 –1  1 –1 –1  1  0 –1 –1 –1  0  1 –1  0  1  1 –1  0  1  0  0  1  0  1  0  0  0  0 –1  0  1  1  0  0  0 –1  1 –1  0  0  1  0  0  0 –1  0  0  0 –1  0  1  0 –1 –1  0  0  1  0  1  0  0  1  0  0  1  0  0  0  1 –1 –1  0 –1 –1  1 –1  0  0  0  1  1  0  0  0 –1  1  1  1  0  0  0  0  0  1  1 –1  1  0  0 –1  0  0  0  1  1  1  0  0  1  0  0  0 –1  0  0 –1  1  0  0  0  0  0  0  1  0 –1 –1  1  0 –1  0 –1  1  1  0  0 –1 –1 –1 –1 –1 –1  0  0  0  1  1 –1 –1} |

| Sequence | Sequence value |
|---|---|
| $\vec{u}_{284}$ | {1 0 0 0 0 0 0 0 0 1 1 0 0 0 0 0 0 0 0 0 0 0<br>0 0 0 0 0 –1 1 0 1 –1 0 0 0 0 0 –1 0 0 0 0 0 0 0<br>0 0 0 0 0 0 0 0 0 0 0 0 0 –1 0 0 0 0 –1 0 1 0<br>0 0 1 –1 –1 0 0 0 0 0 0 0 0 0 0 –1 0 0 1 0 0 0<br>0 0 0 0 0 0 0 0 0 0 0 0 0 0 0 0 0 0 0 0 0 0<br>0 0 0 0 1 0 1 0 0 0 0 0 0 –1 –1 0 0 0 0 0 0 –1<br>0 0 –1 0 0 0 1 0 0 0 0 0 0 0 1 0 –1 0 –1 0 0 0 0<br>0 0 0 0 0 0 1 0 0 0 0 0 0 0 0 0 0 0 –1 1 0 0<br>0 0 1 0 0 0 0 0 0 0 0 0 0 0 0 0 0 0 0 0 0 0<br>0 0 0 0 0 0 0 0 0 0 0 0 0 0 0 0 0 0 0 0 0 0<br>0 0 0 0 0 –1 0 0 0 1 0 0 0 0 0 0 0 0 1 0 0 0 1<br>0 0 0 0 0 0 1 0 0 0 0 0 0 0 –1 0 –1 0 0 –1 0 0<br>0 0 0 0 0 0 0 –1 0 0 0 0 –1 0 0 0 0 0 0 0 1<br>0 0 0 0 0 0 0 0 0 0 0 0 0 0 1 1 0 0 0 –1 0 0 0<br>–1 0 0 0 0 0 0 0 0 0 0 0 0 0 0 1 0 0 0 0 0 0 |
| | 1 0 0 0 0 0 0 0 0 0 0 0 0 0 0 0 0 0 0 0 0 0<br>0 0 0 0 –1 0 1 0 0 0 0 0 0 0 0 0 1 0 0 0 0 0 0<br>–1 0 0 0 0 0 0 0 0 0 0 0 0 0 0 0 0 0 0 0 1 0<br>0 0 0 0 0 0 0 0 0 0 1 0 0 0 0 0 0 0 0 0 0 0<br>0 0 0 0 0 0 0 0 0 0 0 0 0 –1 0 0 0 0 0 0 0 0<br>0 1 0 0 0 0 0 1 0 0 0 0 0 0 0 0 0 0 0 –1 0 0<br>0 0 1 0 0 1 0 0 0 0 0 0 0 0 1 0 0 0 0 0 1 0<br>0 1 0 0 –1 0 0 0 0 1 0 0 0 0} |

| Sequence | Sequence value |
|---|---|
| $\vec{u}_{57}$ | {0 0 0 0 0 0 0 0 0 0 0 0 0 0 0 0 0 0 0 0 0<br>0 0 0 0 0 0 0 0 0 0 0 0 0 0 0 0 0 0 0 0 0<br>0 −1 0 0 0 1 0 0 0 0 0 0 0 0 1 0 0 0 1 0 0 0 0<br>0 0 1 0 0 0 0 0 0 0 0 −1 0 −1 0 0 −1 0 0 0 0 0 0<br>0 0 0 0 −1 0 0 0 0 0 −1 0 0 0 0 0 0 0 1 0 0 0 0<br>0 0 0 0 0 0 0 0 0 0 1 1 0 0 0 −1 0 0 0 −1 0 0 0<br>0 0 0 0 0 0 0 0 0 0 0 1 0 0 0 0 0 0 1 0 0 0<br>0 0 0 0 0 0 0 0 0 0 0 0 0 0 0 0 0 0 0 0 0 0 −1<br>0 1 0 0 0 0 0 0 0 0 0 1 0 0 0 0 0 0 −1 0 0 0 0<br>0 0 0 0 0 0 0 0 0 0 0 0 0 0 0 0 1 0 0 0 0 0 0<br>0 0 0 0 0 1 0 0 0 0 0 0 0 0 0 0 0 0 0 0 0 0 0<br>0 0 0 0 0 0 0 0 0 −1 0 0 0 0 0 0 0 0 0 1 0 0 0<br>0 0 1 0 0 0 0 0 0 0 0 0 0 0 0 −1 0 0 0 0 1 0 0<br>1 0 0 0 0 0 0 0 0 1 0 0 0 0 0 1 0 0 1 0 0 −1 0<br>0 0 0 1 0 0 0 0 1 0 0 0 0 0 0 0 0 1 1 0 0 0<br>0 0 0 0 0 0 0 0 0 0 0 0 0 −1 1 0 1 −1 0 0 0 0 0<br>−1 0 0 0 0 0 0 0 0 0 0 0 0 0 0 0 0 0 0 0 0 0 0 −<br>1 0 0 0 0 −1 0 1 0 0 0 1 −1 −1 0 0 0 0 0 0 0 0 0<br>0 0 −1 0 0 1 0 0 0 0 0 0 0 0 0 0 0 0 0 0 0 0 0 0<br>0 0 0 0 0 0 0 0 0 0 0 0 1 0 1 0 0 0 0 0 0 0 −1<br>−1 0 0 0 0 0 0 −1 0 0 −1 0 0 0 1 0 0 0 0 0 0 0<br>1 0 −1 0 −1 0 0 0 0 0 0 0 0 0 0 1 0 0 0 0 0 0 0<br>0 0 0 0 0 −1 1 0 0 0 0 1 0} |
| $\vec{u}_{481}$ | {1 0 0 0 0 1 −1 0 1 0 −1 0 −1 0 0 0 1 0 0 0 1 0 0<br>1 0 1 0 −1 0 0 1 0 −1 0 0 1 1 1 0 1 −1 −1 0 0 −1 1<br>0 1 0 0 0 1 1 0 0 0 0 0 0 0 1 0 0 1 0 0 1 0 |

| Sequence | Sequence value |
|---|---|
|  | 0  0  1  1  0 –1 –1  1  0  0  0  0  1  1  0  0 –1  0  0 –1  0  1  1<br>0  1  0  1  0  0 –1  1  0 –1  0 –1 –1  0  1  0  0 –1  1  1 –1  0  0<br>1  0  0  0  0  1  0  0  1 –1  1  0  0  0  0  0  0 –1  0  1  0  1  0<br>–1  0  1  1  0  0  0  0  0  1 –1  0  0  0 –1  1 –1  0 –1  0  1  0 –1<br>1 –1  1 –1  0  0 –1  0 –1 –1  1 –1  0  0  0  0  0  1  0  1  1  0  1<br>1  0 –1  0 –1 –1  1  0  1  0 –1 –1  0  0  1  1 –1  1 –1  0  1  1  0  0<br>1  1  0  0  0  0 –1 –1 –1  1  0  0  0 –1 –1  0  0 –1 –1 –1  0  0  1  1<br>1  0 –1  0  0 –1  0  1  1  1  0 –1 –1  0  0  0  0  1  0  0  0  0  0<br>0  0  0  1  1 –1  0  0  0  1  1  1 –1  0  1  1  0  1  0  0  0  0  0<br>1  0  0  0  1 –1  1  0  0  1  0  0 –1  1  0  0  0 –1  0  0 –1  1  0<br>1 –1  0  0  0  1  0 –1  0  0  0 –1  1  1 –1  1  0  0  0 –1  0 –1 –1 –1<br>1 –1 –1 –1  0  0 –1 –1  0  0  1  1  0  1 –1 –1  1  1 –1  0  1 –1 –1  1<br>0  1  0  0 –1 –1  0  0 –1  0 –1  0  1  1 –1  0  0  1  0 –1  0  0  0<br>0  0  0  1 –1  0  1  1  0  1  1  0  0  1  0  1  1  0  0 –1  0  0  0<br>–1  0 –1  0  1 –1  0 –1  1  1  0 –1 –1 –1 –1 –1  0 –1  0  1  1 –1  1  0<br>–1  1  1  0 –1  0  0  0  1  0  1 –1  0  0  0 –1  1  0  1  0  0  1  0<br>0  0  0  0 –1 –1  1 –1 –1 –1 –1  1 –1  0  1  0  0  0  0 –1  0 –1  0  0<br>1  0  0 –1  1 –1 –1 –1  1  0  0  0  0  1  0  1 –1  1  0  0  0 –1  0<br>0  0  0  1 –1 –1  0 –1  1  0  1 –1  1  1  0  0 –1  1 –1 –1  0  1  0} |

(continued)

| Sequence | Sequence value |
|---|---|
| $\vec{u}_{241}$ | {0 1 −1 0 0 0 −1 0 0 0 0 0 −1 −1 1 0 0 0 0 0 0 −1 1 0 −1 0 0 0 1 1 1 0 −1 0 0 1 0 1 −1 0 0 1 1 0 0 −1 0 −1 0 1 0 1 1 −1 1 −1 1 1 0 1 −1 1 1 1 1 0 1 1 −1 1 0 0 0 −1 −1 0 0 1 1 0 −1 1 −1 −1 −1 1 1 0 1 1 1 0 0 0 1 0 −1 1 0 −1 0 1 0 0 −1 −1 0 0 0 1 0 0 −1 0 −1 0 −1 0 0 −1 1 0 0 0 1 −1 0 1 1 −1 0 0 −1 0 1 0 0 0 0 1 1 1 0 −1 1 1 1 −1 0 0 −1 0 1 −1 −1 −1 1 1 1 0 1 −1 0 0 0 −1 0 0 0 −1 −1 −1 0 1 0 1 0 1 0 −1 1 0 0 1 0 1 1 0 −1 1 −1 1 1 1 0 0 0 0 −1 0 0 0 0 1 0 0 1 −1 − 1 1 0 0 −1 0 0 0 1 −1 0 −1 0 1 0 0 0 0 1 −1 −1 −1 −1 1 −1 0 −1 0 1 1 −1 0 0 0 −1 0 0 0 1 1 1 −1 −1 0 0 −1 0 − 1 0 0 −1 0 0 0 0 0 0 0 1 0 1 1 1 0 −1 0 −1 0 0 0 0 1 −1 −1 0 −1 −1 0 0 1 0 −1 −1 0 0 0 0 0 0 −1 0 0 0 0 0 0 0 0 1 0 0 −1 1 −1 1 1 1 0 0 0 −1 0 0 0 −1 0 0 0 0 −1 0 1 0 0 1 −1 −1 0 −1 0 0 0 −1 1 −1 1 0 1 0 0 |
| | 1 −1 0 0 −1 0 −1 1 0 0 0 1 0 −1 0 0 0 0 0 1 −1 1 0 0 0 0 0 −1 0 0 0 −1 0 0 0 1 0 0 1 1 0 1 0 −1 −1 1 1 −1 −1 1 1 1 1 0 1 1 0 −1 0 1 0 1 −1 1 0 1 0 0 0 1 −1 1 0 −1 0 1 0 0 0 0 −1 0 0 −1 1 −1 0 0 0 0 1 1 − 1 1 −1 0 0 −1 −1 1 0 −1 0 −1 0 −1 −1 1 1 1 −1 0 1 1 0 1 1 1 0 0 0 0 1 0 −1 1 0 0 0 −1 −1 1 0 0 −1 −1 1 0 0 1 0 0 0 0 1 −1 0 −1 −1 0 0 0 0 0 0 1 0 0 0 0 1 −1 − 1} |

(continued)

| Sequence | Sequence value |
|---|---|
| $\vec{u}_{31}$ | {1 0 0 1 0 1 0 –1 0 0 1 0 –1 0 0 1 1 1 0 1 –1 –1 0 0 –1 1 0 1 0 0 0 1 1 0 0 0 0 0 0 0 1 0 0 1 0 0 1 0 0 0 1 1 0 –1 –1 1 0 0 0 0 1 1 0 0 –1 0 0 –1 0 1 1 0 1 0 1 0 0 –1 1 0 –1 0 –1 –1 0 1 0 0 –1 1 1 –1 0 0 1 0 0 0 0 1 0 0 1 –1 1 0 0 0 0 0 0 –1 0 1 0 1 0 –1 0 1 1 0 0 0 0 0 1 –1 0 0 0 –1 1 –1 0 –1 0 1 0 –1 1 –1 1 –1 0 0 –1 0 –1 –1 1 –1 0 0 0 0 0 1 0 1 1 0 1 1 0 –1 0 –1 –1 1 0 1 0 –1 –1 0 0 1 1 –1 1 –1 0 1 1 0 0 1 1 0 0 0 0 –1 –1 –1 1 0 0 0 –1 –1 0 0 –1 –1 –1 0 0 1 1 1 0 –1 0 0 –1 0 1 1 1 0 –1 –1 0 0 0 0 1 0 0 0 0 0 0 0 0 1 1 –1 0 0 0 1 1 1 –1 0 1 1 0 1 0 0 0 0 0 1 0 0 0 1 –1 1 0 0 1 0 0 –1 1 0 0 0 –1 0 0 –1 1 0 1 –1 0 0 0 1 0 –1 0 0 0 –1 1 1 –1 1 0 0 0 –1 0 –1 –1 –1 1 –1 –1 –1 0 0 –1 –1 0 0 1 1 0 1 –1 –1 1 1 –1 0 1 –1 –1 1 0 1 0 0 –1 –1 0 0 –1 0 –1 0 1 1 –1 0 0 1 0 –1 0 0 0 0 0 0 1 –1 0 1 1 0 1 1 0 0 1 0 1 1 0 0 –1 0 0 0 –1 0 –1 0 1 –1 0 –1 1 1 0 –1 –1 –1 –1 –1 0 –1 0 1 1 –1 1 0 –1 1 1 0 –1 0 0 0 1 0 1 –1 0 0 0 –1 1 0 1 0 0 1 0 0 0 0 0 –1 –1 1 –1 –1 –1 –1 1 –1 0 1 0 0 0 0 –1 0 –1 0 0 1 0 0 –1 1 –1 –1 –1 1 0 0 0 0 1 0 1 –1 1 0 0 0 –1 0 0 0 0 1 –1 –1 0 –1 1 0 1 –1 1 1 0 0 –1 1 –1 –1 0 1 0 1 0 0 0 0 1 –1 0 1 0 –1 0 –1 0 0 0 1 0 0 0} |
| $\vec{u}_{482}$ | {0 0 1 0 0 –1 1 –1 1 1 1 0 0 0 –1 0 0 0 –1 0 0 0 0 –1 0 1 0 0 1 –1 –1 0 –1 0 0 0 –1 1 –1 1 0 1 0 0 1 –1 0 0 –1 0 –1 1 0 0 0 1 0 –1 0 0 0 0 0 1 –1 1 0 0 0 0 0 –1 0 0 0 –1 0 0 0 1 0 0 1 1 0 1 0 –1 –1 1 1 –1 – |

(continued)

| Sequence | Sequence value |
|---|---|
| | 1 1 1 1 1 0 1 1 0 –1 0 1 0 1 –1 1 0 1 0 0 0 1 –1 1 0 –1 0 1 0 0 0 0 –1 0 0 –1 1 –1 0 0 0 0 1 1 –1 1 – 1 0 0 –1 –1 1 0 –1 0 –1 0 –1 –1 1 1 1 –1 0 1 1 0 1 1 1 0 0 0 0 1 0 –1 1 0 0 0 –1 –1 1 0 0 –1 –1 1 0 0 1 0 0 0 0 1 –1 0 –1 –1 0 0 0 0 0 0 1 0 0 0 0 1 –1 –1 0 1 –1 0 0 0 –1 0 0 0 0 0 –1 –1 1 0 0 0 0 0 0 –1 1 0 – 1 0 0 0 1 1 1 0 –1 0 0 1 0 1 –1 0 0 1 1 0 0 –1 0 –1 0 1 0 1 1 –1 1 –1 1 1 0 1 –1 1 1 1 1 0 1 1 –1 1 0 0 0 –1 –1 0 0 1 1 0 –1 1 –1 –1 –1 1 1 0 1 1 1 0 0 0 1 0 –1 1 0 –1 0 1 0 0 –1 –1 0 0 0 1 0 0 –1 0 –1 0 –1 0 0 –1 1 0 0 0 1 –1 0 1 1 –1 0 0 –1 0 1 0 0 0 0 1 1 1 0 –1 1 1 1 –1 0 0 –1 0 1 –1 –1 –1 1 1 1 0 1 –1 0 0 0 –1 0 0 0 –1 –1 –1 0 1 0 1 0 1 0 –1 1 0 0 1 0 1 1 0 –1 1 –1 1 1 1 0 0 0 0 –1 0 0 0 0 1 0 0 1 –1 –1 1 0 0 –1 0 0 0 1 –1 0 –1 0 1 0 0 0 0 1 –1 –1 –1 –1 1 –1 0 –1 0 1 1 –1 0 0 0 –1 0 0 0 1 1 1 –1 –1 0 0 –1 0 –1 0 0 –1 0 0 0 0 0 0 0 1 0 1 1 1 0 –1 0 –1 0 0 0 0 1 –1 –1 0 –1 –1 0 0 1 0 –1 –1 0 0 0 0 0 0 –1 0 0 0 0 0 0} |

(continued)

| Sequence | Sequence value |
|---|---|
| $\vec{u}_{228}$ | {1 −1 −1 0 0 0 0 0 0 0 0 0 0 0 −1 0 0 1 0 0 0 0 0<br>0 0 0 0 0 0 0 0 0 0 0 0 0 0 0 0 0 0 0 0 0 0<br>0 0 1 0 1 0 0 0 0 0 0 0 −1 −1 0 0 0 0 0 0 −1 0 0<br>−1 0 0 0 1 0 0 0 0 0 0 0 1 0 −1 0 −1 0 0 0 0 0<br>0 0 0 0 0 1 0 0 0 0 0 0 0 0 0 0 0 0 −1 1 0 0 0<br>0 1 0 0 0 0 0 0 0 0 0 0 0 0 0 0 0 0 0 0 0 0 0<br>0 0 0 0 0 0 0 0 0 0 0 0 0 0 0 0 0 0 0 0 0 0 0<br>0 0 0 0 −1 0 0 0 1 0 0 0 0 0 0 0 0 1 0 0 0 1 0<br>0 0 0 0 0 1 0 0 0 0 0 0 0 −1 0 −1 0 0 −1 0 0 0<br>0 0 0 0 0 0 0 −1 0 0 0 0 −1 0 0 0 0 0 0 0 1 0<br>0 0 0 0 0 0 0 0 0 0 0 0 0 1 1 0 0 0 −1 0 0 0 −1<br>0 0 0 0 0 0 0 0 0 0 0 0 0 0 1 0 0 0 0 0 0 1<br>0 0 0 0 0 0 0 0 0 0 0 0 0 0 0 0 0 0 0 0 0 0 0<br>0 0 0 −1 0 1 0 0 0 0 0 0 0 0 0 1 0 0 0 0 0 0 −1<br>0 0 0 0 0 0 0 0 0 0 0 0 0 0 0 0 0 0 0 1 0 0 |
| | 0 0 0 0 0 0 0 0 0 1 0 0 0 0 0 0 0 0 0 0 0 0<br>0 0 0 0 0 0 0 0 0 0 0 0 −1 0 0 0 0 0 0 0 0 0<br>1 0 0 0 0 0 1 0 0 0 0 0 0 0 0 0 0 0 −1 0 0 0<br>0 1 0 0 1 0 0 0 0 0 0 0 0 1 0 0 0 0 0 1 0 0<br>1 0 0 −1 0 0 0 0 1 0 0 0 0 1 0 0 0 0 0 0 0 0 1<br>1 0 0 0 0 0 0 0 0 0 0 0 0 0 0 0 −1 1 0 1 −1 0<br>0 0 0 −1 0 0 0 0 0 0 0 0 0 0 0 0 0 0 0 0 0 0<br>0 0 0 −1 0 0 0 0 −1 0 1 0 0 0} |

(continued)

| Sequence | Sequence value |
|---|---|
| $\vec{u}_{456}$ | {0 0 0 0 0 0 0 0 0 0 −1 0 0 0 1 0 0 0 0 0 0 0<br>0 1 0 0 0 1 0 0 0 0 0 0 1 0 0 0 0 0 0 0 0 −1 0<br>−1 0 0 −1 0 0 0 0 0 0 0 0 0 0 −1 0 0 0 0 0 −1 0 0<br>0 0 0 0 0 1 0 0 0 0 0 0 0 0 0 0 0 0 0 0 0 1 1<br>0 0 0 −1 0 0 0 −1 0 0 0 0 0 0 0 0 0 0 0 0 0 0 1<br>0 0 0 0 0 0 1 0 0 0 0 0 0 0 0 0 0 0 0 0 0 0<br>0 0 0 0 0 0 0 0 0 0 −1 0 1 0 0 0 0 0 0 0 0 0 1<br>0 0 0 0 0 0 −1 0 0 0 0 0 0 0 0 0 0 0 0 0 0 0 0<br>0 0 0 1 0 0 0 0 0 0 0 0 0 0 0 1 0 0 0 0 0 0<br>0 0 0 0 0 0 0 0 0 0 0 0 0 0 0 0 0 0 −1 0 0 0<br>0 0 0 0 0 0 1 0 0 0 0 0 1 0 0 0 0 0 0 0 0 0<br>0 0 0 −1 0 0 0 0 1 0 0 1 0 0 0 0 0 0 0 0 1 0 0<br>0 0 0 1 0 0 1 0 0 −1 0 0 0 0 1 0 0 0 0 1 0 0 0<br>0 0 0 0 0 1 1 0 0 0 0 0 0 0 0 0 0 0 0 0 0 0<br>0 −1 1 0 1 −1 0 0 0 0 0 −1 0 0 0 0 0 0 0 0 0 0 0<br>0 0 0 0 0 0 0 0 0 0 −1 0 0 0 0 −1 0 1 0 0 0 1 −1<br>−1 0 0 0 0 0 0 0 0 0 0 0 −1 0 0 1 0 0 0 0 0 0<br>0 0 0 0 0 0 0 0 0 0 0 0 0 0 0 0 0 0 0 0 0 0<br>0 1 0 1 0 0 0 0 0 0 0 −1 −1 0 0 0 0 0 −1 0 0 −1<br>0 0 0 1 0 0 0 0 0 0 0 1 0 −1 0 −1 0 0 0 0 0 0 0<br>0 0 0 1 0 0 0 0 0 0 0 0 0 0 0 0 −1 1 0 0 0 0 1<br>0 0 0 0 0 0 0 0 0 0 0 0 0 0 0 0 0 0 0 0 0 0<br>0 0 0 0 0 0 0 0 0 0 0 0 0 0} |
| $\vec{u}_{103}$ | {0 1 −1 0 −1 −1 1 1 1 −1 −1 0 0 0 1 0 1 0 0 1 −1 0 0 −<br>1 0 1 −1 1 1 0 0 0 −1 1 0 0 0 0 1 0 0 0 1 0 1 1<br>0 0 1 −1 −1 −1 0 0 1 1 0 0 −1 −1 0 −1 1 0 0 0 0 0 0 |

(continued)

| Sequence | Sequence value |
|---|---|
| | 1 0 0 –1 –1 1 –1 0 1 0 1 0 1 –1 1 0 0 0 1 0 0 –1 0 1 0 0 0 1 –1 0 0 1 1 1 0 –1 0 1 0 0 0 –1 0 –1 0 –1 0 –1 0 –1 1 0 1 0 0 0 0 0 1 1 0 –1 0 0 0 –1 –1 –1 1 –1 1 0 0 –1 0 0 1 1 0 –1 1 –1 1 0 0 1 0 –1 0 –1 0 0 1 1 –1 –1 –1 0 0 –1 –1 –1 –1 1 –1 1 –1 1 0 –1 1 –1 0 0 0 0 1 0 –1 1 1 0 0 1 0 0 0 0 0 1 0 –1 –1 0 1 0 –1 –1 0 0 0 1 0 –1 –1 1 1 1 1 0 1 0 0 0 0 –1 0 1 0 0 0 0 0 0 0 0 1 1 0 0 1 0 0 0 –1 1 1 0 0 1 0 1 1 0 0 0 0 1 –1 –1 0 –1 –1 –1 –1 0 1 0 0 1 –1 1 0 0 0 0 0 –1 1 –1 0 0 0 –1 1 1 1 0 0 0 0 0 0 0 1 0 1 0 –1 1 0 0 1 0 0 –1 0 –1 –1 1 0 –1 0 0 0 1 0 0 1 1 0 0 0 1 1 –1 0 1 0 0 –1 0 0 0 0 1 0 0 1 0 0 –1 0 0 0 1 0 0 0 0 0 0 1 1 1 –1 1 0 –1 0 1 1 0 1 –1 1 0 0 1 –1 1 0 0 1 1 0 –1 0 1 0 0 –1 0 0 1 –1 –1 0 1 –1 0 0 0 –1 1 0 1 –1 0 1 –1 0 0 1 1 0 0 0 0 0 –1 0 0 0 0 1 1 1 –1 0 –1 –1 0 0 1 0 –1 0 0 –1 0 –1 0 –1 –1 1 1 –1 0 1 1 0 –1 0 0 –1 1 0 –1 0 0 1 0 1 1 0 1 –1 0 1 0 –1 0 1 0 0 0 0 –1 1 0 0 0 –1 0 0 0 –1 1 0 1 0 1 1 –1 1 0 – 1 –1 –1 –1 –1 0 0 0 0 1 –1 0 –1 –1 –1 0 –1 0 1 –1 –1 0 1 –1 – 1} |

| Sequence | Sequence value |
|---|---|
| $\vec{u}_{416}$ | {0 1 0 0 0 1 −1 −1 0 −1 −1 1 −1 0 0 0 1 1 0 0 0 −1 1 1 1 0 0 0 0 0 1 1 −1 1 0 0 −1 0 0 0 1 1 1 0 0 1 0 0 0 −1 0 0 0 −1 1 0 0 0 0 0 0 1 0 −1 −1 1 0 −1 0 − 1 1 1 0 0 −1 −1 −1 −1 −1 −1 0 0 0 1 1 −1 −1 0 0 1 −1 1 1 −1 1 0 1 1 −1 0 1 0 0 1 1 0 0 1 0 0 0 0 1 0 1 0 0 −1 1 0 0 1 0 1 0 0 0 0 0 0 0 −1 −1 1 −1 −1 1 0 1 0 0 1 1 0 0 0 1 0 −1 −1 0 0 0 0 0 0 0 −1 0 0 0 1 0 0 0 −1 0 −1 −1 0 1 0 0 1 1 0 0 1 −1 0 −1 0 1 1 0 0 0 0 0 1 0 0 0 0 −1 0 0 1 0 −1 −1 −1 0 0 1 −1 0 − 1 1 1 1 −1 1 0 1 0 0 0 1 1 0 1 0 0 0 0 0 0 −1 −1 1 1 0 1 0 1 −1 0 0 0 0 0 0 0 0 −1 1 0 1 0 −1 −1 1 0 0 0 0 0 −1 0 0 −1 0 1 0 1 1 1 1 0 1 0 0 0 0 −1 1 0 0 −1 0 0 0 0 −1 0 0 −1 0 0 0 0 −1 1 1 1 0 0 0 −1 0 −1 0 0 0 −1 0 0 1 1 0 −1 −1 0 −1 0 1 −1 0 0 −1 0 |
| | 0 1 −1 −1 1 −1 1 1 0 −1 0 1 −1 1 −1 0 −1 −1 −1 0 −1 1 −1 −1 0 1 0 −1 0 0 1 −1 1 −1 −1 −1 −1 0 0 −1 0 1 1 −1 −1 −1 1 0 1 1 −1 0 1 −1 0 0 1 0 1 1 −1 −1 0 1 1 −1 0 −1 0 −1 1 −1 1 0 0 0 0 −1 1 0 0 1 0 1 0 −1 0 −1 1 −1 0 1 1 0 0 1 0 1 −1 −1 1 0 0 1 0 −1 1 0 0 0 1 1 0 0 0 1 0 1 0 −1 0 −1 0 0 0 1 −1 1 −1 −1 1 0 −1 −1 −1 0 1 −1 0 1 1 −1 0 1 0 0 1 0 1 0 0 0 0 −1 0 1 1 0 0 0 −1 1 −1 0 0 1 0 0 0 −1 0 0 0 −1 0 1 0 −1 −1 0 0 1 0 1 0 0 1 0} |

41

(continued)

| Sequence | Sequence value |
|---|---|
| $\vec{u}_{171}$ | {1  1  0  0  1  0 –1  1  0  0  0  1  0 –1  0  0  0 –1  0  0  0  0  0<br>0 –1 –1  0  1 –1  1  0  1  0 –1 –1  0  1 –1 –1 –1  0 –1  0  1 –1 –1  1<br>0 –1  1 –1  0  1  1  1  0  0 –1  0  0  0  0  1 –1  0  0  0  0  1 –1 –<br>1 –1  1  1 –1  0 –1  1  0  1  0  0  1  1  0 –1 –1  0 –1  0 –1 –1  0  0<br>–1  0  1  0  0  1  0  1 –1  0 –1  0  0  0 –1  1  1  1 –1  0 –1 –1 –1<br>1 –1  0  1  0  1  0 –1  0  0 –1  0  0 –1 –1  1  0  1  1  0  1 –1  0<br>0 –1  0  0  0  1  1  0  0  0  1  1  0 –1  1  0  0  0  0 –1  0 –1  0<br>1  1  0 –1  0  1  0  0  1 –1  0  0 –1 –1  1  0  0  0  1  0 –1  1  0<br>1 –1  0 –1 –1  1  0  0  0  0  1  0  0  0  0  1  0  0  1  0  0  0  0<br>0  1  1  0  0 –1  0  0  1 –1  0  0  0 –1  0  0  0  1  0  1  1  1  1<br>0  0 –1  0  0 –1  0  0  1  0 –1  1 –1 –1  1  0  0  0  0  0  1 –1  1<br>0  0  0  0  0  0  1  0  0  0  1  1  1  0  1  1  1  1  0  0  0  0 –1<br>–1  0  1  0 –1 –1  1  0  0  0  1  1 –1  0  0 –1  0  1  0 –1 –1 –1 –1<br>1 –1  0  1  0  0  0  0  0  0  0  1  1 –1 –1  0  1  0  0  1  0  1  0<br>0  0  0  0  1  0  0  1 –1  0  1  0  0  0  0  1  0  1  1  1  0  0 –1<br>1  0  1  0  1  0  1 –1  0  0  0  0  0  0  0 –1  0 –1  0  0 –1  1 –<br>1  0  0 –1  1 –1 –1  1  1  0  0  0  1  0  0  1 –1  1 –1 –1  0  0  1<br>0 –1 –1 –1  0 –1  1  0  0 –1 –1  0 –1  1 –1 –1 –1 –1  1  1 –1  0  0 –1  1<br>1  0 –1  0  0  0  1  0  1  0  1  0  0  0  0  1 –1  1  0 –1  0 –1  0<br>0  0  1  1  0 –1  0  0  1  0  0  0  1  0  0  1  0 –1  0 –1  0 –1  0<br>1  1  1  0 –1  0  0  1 –1 –1  1  0  0  1  1  0  0  0  0  0  1  0  1<br>1  0  0 –1  1 –1  1  0  1 –1  0  0  0 –1 –1 –1  1  0  0  0  1 –1  0<br>0} |
| $\vec{u}_{384}$ | {1  0  0  1 –1  0 –1 –1 –1  0  0  1  0  0  0 –1  0  1  0  0  0  0  1<br>0 –1  0  1 –1  0  1  0  0  1  1  1 –1  1 –1  0  1  1  0  0  1  0  0<br>1  0  0  1  0 –1  1  0  1 –1 –1 –1  1 –1  0  0  1  0  0  1 –1  0  1 |

(continued)

| Sequence | Sequence value |
| --- | --- |
|  | 0 –1  0  0 –1  1  0  0  1  1  0  0  0  0  0  0  0 –1  1  0  0  0 –1 –1  0  0  1  0 –1  0  0  0  1  1  0  1  0  0  1  0  1  1  1 –1 –1  1  1  0 –1  0  0  0  1  0  1  1  0  0  0 –1  1 –1  0  1  0  1  1  0  0 –1  0 –1  1  0  0 –1 –1  1  1  0  0  0  1  1 –1  1 –1  0 –1  1  1  0 –1  0  0  0  0  0  1 –1  0 –1  0 –1  1  0 –1 –1  0 –1  1 –1  0  1 –1  0  0  0  0  0 –1  0  1 –1  0 –1  0 –1  1 –1  1  1  0  1  0 –1  0  1  0 –1  0  0  0  0  0  0 –1  0  1  0  0  1  0  1  0  1 –1  1 –1  0  0 –1  0 –1  1  1  1  0 –1 –1 –1  0  0  0  0  0  0  1 –1  1  0  0  1  1  1  0  1  0  0  1  0  0  1  1 –1  1  0  1  0 –1  1 –1  0  1  0  1  0  0  0 –1  0  0 –1  0  0  0  0  1  1  0  0  1 –1  1  0  0  0  0  1  0 –1 –1  1  1  0 –1 –1  0 –1  1  0  0  1  1  0  1  0  0  0  0 –1 –1 –1  0 –1 –1 –1  1  0  0  0  0 –1 –1 –1 –1  1  1 –1  1 –1  0  0  0  0  0  1  1  1  1  0 –1 –1  1 –1 –1  0  0  0 –1  0  1  1  1  0  0  1 –1  0  0  1  0  0  0  0  0 –1  0  0  1  0 –1  0  0  1 –1  1  0 –1 –1  0  1  0  0  0 –1 –1 –1 –1  0  0 –1 –1  1 –1 –1  0  0  1  1  0 –1 –1  0  0  0  1  0  1  0  1  0  0 –1  0  0  0  1  1 –1  0  0  0 –1 –1  0 –1 –1  0  1  0 –1  0  1  1  1  0  0  0  1  0  0 –1 –1  0  0  0  1  0  0  0 –1  0  0  0  0  0  0  0  1  0  0  0  0 –1  0  0  0  1 –1  0  0  0  0  1  0  0  1  1 –1  0  0  1  0 –1  0  1  0 –1  1  0  0  0  0 –1  1  0  1 –1 –1  1  0} |

For another example, when n is equal to 7, the following original m-sequence with a length N being 127 (that is, $2^n-1$) is used as an example.

$$\vec{s} = \{\; 1\quad 1\quad 1 -1 -1 -1\quad 1 -1 -1\quad 1\quad 1\quad 1 -1\quad 1 -1\quad 1\quad 1 -1\quad 1 -1 -1 -1 -1 -1\quad 1 -1\quad 1 -1$$

$$1 -1\quad 1\quad 1\quad 1\quad 1 -1\quad 1 -1 -1\quad 1 -1 -1 -1 -1\quad 1\quad 1 -1 -1 -1\quad 1\quad 1 -1\quad 1 -1\quad 1\quad -1 -1$$

$$1\quad 1 -1 -1\quad 1\quad 1\quad 1\quad 1\quad 1 -1 -1\quad 1 -1 -1\quad 1 -1\quad 1 -1 -1 -1\quad 1 -1\quad 1\quad 1\quad 1 -1 -1\quad 1$$

$$1 -1\quad 1\quad 1\quad 1 -1\quad 1\quad 1\quad 1\quad 1\quad 1 -1\quad 1 -1\quad 1\quad 1 -1 -1\quad 1 -1\quad 1\quad 1 -1 -1 -1 -1$$

$$1 -1 -1 -1\quad 1\quad 1\quad 1\quad 1 -1 -1 -1 -1 -1 -1 -1\}$$

When $d_1=2^k+1$ and $d_2=(2^{2k}-2^k+1)^{-1}$, according to the foregoing generation manner of the sequence pair, when k=1, 2, 3, ..., 6, six pairs of ternary perfect sequences may be obtained. For example, when k is equal to 1, a sequence pair of $\vec{u}_3$ and $\vec{u}_{85}$ may be obtained. When k is equal to 2, a sequence pair of $\vec{u}_5$ and $\vec{u}_{88}$ may be obtained. When k is equal to 3, a sequence pair of $\vec{u}_9$ and $\vec{u}_{78}$ may be obtained. When k is equal to 4, a sequence pair of $\vec{u}_{17}$ and $\vec{u}_{39}$ may be obtained. When k is equal to 5, a sequence pair of $\vec{u}_{33}$ and $\vec{u}_{11}$ may be obtained. When k is equal to 6, a sequence pair of $\vec{u}_{65}$ and $\vec{u}_{86}$ may be obtained. It may be understood that when k is equal to 1, $d_1=2^1+1=3$, $d_2$ may be solved by using $d_2 \times d_2^{-1}=(2^{2k}-2^k+1)^{-1} \times (2^{2k}-2^k+1)=d_2 \times 3=1(\bmod N)$, and N=127. Therefore, $d_2=85$. It may be further understood that a calculation manner of $d_1$ and $d_2$ when k is equal to another value is the same as a calculation manner of $d_1$ and $d_2$ when k is equal to 1. Details are not described herein.

When $d_1=(2^k+1)^{-1}$ and $d_2=2^{2k}-2^k+1$, according to the foregoing generation manner of the sequence pair, when k=2, 3, 4, ..., 6, five pairs of ternary perfect sequences may be obtained. For example, when k is equal to 2, a sequence pair of $\vec{u}_{51}$ and $\vec{u}_{13}$ may be obtained. When k is equal to 3, a sequence pair of $\vec{u}_{113}$ and $\vec{u}_{57}$ may be obtained. When k is equal to 4, a sequence pair of $\vec{u}_{15}$ and $\vec{u}_{114}$ may be obtained. When k is equal to 5, a sequence pair of $\vec{u}_{77}$ and $\vec{u}_{104}$ may be obtained. When k is equal to 6, a sequence pair of $\vec{u}_{43}$ and $\vec{u}_{96}$ may be obtained. It may be understood that when k is equal to 2, $d_2=2^4-2^2+1=13$, $d_1$ may be solved by using $d_1 \times d_1^{-1}=(2^k+1)^{-1} \times (2^k+1)=d_1 \times 5=1(\bmod N)$, and N=127. Therefore, $d_1=51$. It may be further understood that a calculation manner of $d_1$ and $d_2$ when k is equal to another value is the same as a calculation manner of $d_1$ and $d_2$ when k is equal to 2. Details are not described herein.

The following Table 2 shows specific values of the foregoing 11 pairs of ternary perfect sequences. For example, the first sequence may be any sequence in the following Table 2, and the second sequence is another sequence that belongs to a same sequence pair as the first sequence. For example, if the first sequence is $\vec{u}_3$, the second sequence may be $\vec{u}_{85}$. Certainly, the first sequence may alternatively be $\vec{u}_{85}$, and the second sequence is $\vec{u}_3$. This embodiment of this application does not restrict which sequence within the sequence pair corresponds to the first or second sequence, provided that the first sequence and the second sequence belong to a same sequence pair. For another example, the first sequence is $\vec{u}_{88}$, and the second sequence may be $\vec{u}_5$. Alternatively, the first sequence is $\vec{u}_{65}$, and the second sequence may be $\vec{u}_{86}$. Alternatively, the first sequence is $\vec{u}_{51}$, and the second sequence may be $\vec{u}_{13}$. Alternatively, the first sequence is $\vec{u}_{15}$, and the second sequence may be $\vec{u}_{114}$. Alternatively, the first sequence is $\vec{u}_{96}$, and the second sequence may be $\vec{u}_{43}$, and the like. Examples are not enumerated herein.

It may be understood that each sequence in the following Table 2 may be replaced with an equivalent transformed sequence of the sequence. The equivalent transformed sequence may be obtained after a cyclic shift or sign inversion (for example, inverting an element 1 to -1, inverting an element -1 to 1, and keeping an element 0 unchanged) is performed on any sequence in Table 2. It may be further understood that a specific value of the sequence pair shown in Table 2 is merely an example. When n is set to a different value, generated sequence pairs may be different. Any two ternary perfect sequences that satisfy the foregoing formula (2-5) fall within the protection scope of embodiments of this application.

Table 2

| Sequence | Sequence value |
|---|---|
| $\vec{u}_3$ | {0 0 1 0 -1 1 0 1 -1 1 1 0 0 1 -1 -1 0 0 1 0 -1 0 1 1 0 0 -1 1 0 0 0 0 0 1 -1 0 -1 1 0 -1 0 1 -1 1 0 -1 0 0 0 -1 -1 0 0 -1 0 0 0 -1 0 0 0 0 0 1 0 0 1 0 0 1 -1 0 1 0 0 1 1 -1 -1 0 1 1 1 0 0 0 0 1 1 1 -1 -1 -1 -1 0 0 0 1 1 1 0 1 -1 0 0 0 1 0 1 0 0 1 0 1 -1 1 1 -1 0 -1 0 -1 0 -1 0 0} |
| $\vec{u}_{85}$ | {0 -1 0 0 1 1 0 0 1 -1 -1 1 0 0 0 -1 1 -1 0 -1 -1 -1 0 1 0 -1 1 -1 1 0 1 0 0 1 0 1 -1 0 0 1 0 -1 0 0 1 1 1 1 0 0 -1 0 1 1 1 0 0 0 0 -1 0 0 0 0 -1 1 0 1 0 0 0 0 0 1 -1 -1 1 -1 0 1 1 0 0 0 0 0 0 -1 0 1 0 -1 1 0 -1 -1 -1 -1 1 1 -1 -1 0 0 1 1 0 1 -1 0 1 0 -1 0 1 0 0 0 1 0} |
| $\vec{u}_5$ | {0 -1 0 -1 1 -1 0 -1 0 0 0 -1 1 0 0 1 0 0 0 1 0 0 0 0 0 0 1 0 0 1 0 0 1 -1 0 1 0 0 1 -1 -1 1 0 1 1 1 0 0 0 0 1 1 -1 -1 -1 1 1 1 0 0 0 1 -1 1 0 1 1 0 0 0 -1 0 -1 0 0 1 0 1 -1 -1 -1 -1 0 -1 0 1 0 1 0 0 0 0 1 0 -1 1 0 -1 1 1 1 0 0 1 -1 1 1 0 0 -1 0 1 0 -1 -1 0 0 -1 -1 0 0 0 0 0 1 -1 0 1 1} |
| $\vec{u}_{88}$ | {1 -1 1 -1 0 0 0 -1 1 1 0 -1 0 1 0 -1 0 0 -1 0 1 0 1 -1 -1 1 0 1 0 0 1 -1 0 0 1 1 1 0 0 -1 1 0 -1 0 1 -1 0 0 0 1 0 0 0 1 0 -1 -1 -1 0 1 1 0 0 1 0 0 0 0 -1 1 1 -1 0 0 1 0 1 1 0 1 -1 1 0 0 0 0 -1 0 1 0 0 0 -1 1 0 1 1 0 -1 0 0 0 0 0 0 1 1 0 0 0 0 1 0 0 1 0 0 1 -1 -1 -1 -1 -1 -1 0 -1} |
| $\vec{u}_9$ | {0 -1 -1 0 0 1 -1 0 0 0 0 0 1 1 0 -1 1 0 1 0 -1 -1 -1 0 1 0 0 0 1 -1 0 0 -1 0 0 0 -1 0 0 0 0 0 0 0 1 0 0 1 0 0 1 1 0 1 0 0 1 -1 1 -1 0 1 1 1 0 0 0 0 1 1 -1 1 1 1 -1 -1 0 0 0 1 -1 1 0 1 -1 0 0 0 -1 0 -1 0 0 1 0 1 1 -1 -1 1 1 0 1 0 -1 0 -1 0 0 0 0 0 1 0 1 1 1 0 -1 -1 1 1 1 0 0 1 1 -1 0 0 -1 0 -1} |
| $\vec{u}_{78}$ | {0 1 0 1 0 0 0 0 -1 0 0 1 0 -1 1 0 -1 -1 0 0 -1 1 0 0 0 1 1 1 0 0 0 1 -1 0 0 -1 0 -1 -1 1 0 0 -1 0 1 1 0 0 0 0 1 -1 0 0 -1 0 0 -1 0 -1 1 0 0 -1 -1 1 1 0 0 -1 -1 0 -1 1 0 -1 0 1 -1 1 1 1 0 0 0 0 0 1 0 1 0 1 1 0 0 0 1 0 0 1 1 -1 1 0 0 0 0 0 -1 0 0 1 -1 0 -1 0 1 1 0 1 0 0 -1 -1 1 0} |

(continued)

| Sequence | Sequence value |
|---|---|
| $\vec{u}_{17}$ | {0 0 1 1 -1 0 0 -1 0 -1 0 -1 -1 0 0 1 -1 0 0 0 0 0 1 1 0 -1 1 0 1 0 -1 -1 -1 0 1 0 0 0 1 -1 0 0 -1 0 0 0 -1 0 0 0 0 0 0 1 0 0 1 0 0 1 1 0 1 0 0 1 -1 1 -1 0 1 1 1 0 0 0 0 1 1 -1 1 1 -1 -1 0 0 0 1 -1 1 0 1 -1 0 0 0 -1 0 -1 0 0 1 0 1 1 -1 -1 1 1 0 1 0 -1 0 -1 0 0 0 0 1 0 1 1 0 -1 1 1 1} |
| $\vec{u}_{39}$ | {1 0 -1 1 0 -1 -1 0 0 -1 1 0 0 1 1 1 0 0 0 1 -1 0 0 -1 0 -1 -1 1 0 0 -1 0 1 1 0 0 0 1 -1 0 -1 0 1 0 1 0 0 -1 0 0 -1 0 -1 0 -1 1 0 0 -1 -1 1 1 0 0 -1 -1 0 -1 1 0 -1 0 1 -1 1 1 1 0 0 0 0 1 0 1 0 1 1 0 0 0 1 0 0 1 1 - 1 1 0 0 0 0 -1 0 0 1 -1 0 -1 0 1 1 0 1 0 -1 -1 1 0 0 1 0 1 0 0 0 0 -1 0 0} |
| $\vec{u}_{33}$ | {0 1 0 1 0 0 0 0 1 0 -1 1 0 -1 1 1 1 0 0 1 -1 1 0 0 -1 0 1 0 -1 -1 0 0 -1 -1 0 0 0 0 0 1 -1 0 1 1 0 -1 0 -1 1 -1 0 -1 0 0 0 -1 1 0 0 1 0 0 0 1 0 0 0 0 0 0 1 0 0 1 0 0 1 -1 0 1 0 0 1 -1 1 1 0 1 1 1 0 0 0 0 1 1 -1 -1 -1 1 1 0 0 0 1 -1 1 0 1 1 0 0 0 -1 0 -1 0 0 1 0 1 -1 -1 -1 -1 0 -1} |
| $\vec{u}_{11}$ | {0 0 0 0 0 0 1 1 0 0 0 0 1 0 0 1 0 0 1 -1 -1 -1 -1 -1 -1 -1 0 -1 1 -1 1 -1 0 0 0 -1 1 1 0 -1 0 1 0 -1 0 0 -1 0 1 0 1 -1 -1 1 0 1 0 0 1 -1 0 0 1 1 1 0 0 -1 1 0 -1 0 1 -1 0 0 0 1 0 0 0 1 0 -1 -1 -1 0 1 1 0 0 1 0 0 0 0 -1 1 1 -1 0 0 1 0 1 1 0 1 -1 1 0 0 0 0 0 -1 0 1 0 0 0 -1 1 0 1 1 0 -1} |
| $\vec{u}_{65}$ | {0 1 -1 0 -1 1 0 -1 0 1 -1 1 0 -1 0 0 0 -1 -1 0 0 -1 0 0 0 -1 0 0 0 0 0 0 1 0 0 1 0 0 1 -1 0 1 0 0 1 1 -1 -1 0 1 1 1 0 0 0 0 1 1 1 -1 -1 -1 -1 0 0 0 1 1 1 0 1 -1 0 0 0 1 0 1 0 0 1 0 1 -1 1 1 -1 0 -1 0 -1 0 -1 0 0 0 0 1 0 -1 1 0 1 -1 1 1 0 0 1 -1 -1 0 0 1 0 -1 0 1 1 0 0 -1 1 0 0 0 0} |
| $\vec{u}_{86}$ | {0 1 0 -1 0 0 1 1 1 0 0 -1 0 0 0 1 1 0 0 0 1 0 1 1 1 0 0 0 0 -1 0 0 0 0 -1 1 0 1 0 0 0 0 0 1 -1 -1 1 1 -1 0 1 1 0 0 0 0 0 -1 0 1 0 -1 1 0 -1 1 -1 -1 -1 1 1 -1 -1 0 0 1 1 0 1 -1 0 1 0 -1 0 1 0 0 0 1 0 0 -1 0 0 1 1 0 0 1 -1 -1 1 0 0 0 -1 1 -1 0 -1 -1 -1 0 1 0 -1 1 -1 1 1 0 1 0 0 1 0 1 -1 0} |
| $\vec{u}_{51}$ | {0 1 0 0 1 1 0 0 0 0 1 1 0 1 0 0 0 0 1 0 -1 0 0 1 0 1 -1 0 -1 1 0 0 1 0 1 0 -1 0 1 1 0 0 0 -1 0 0 0 0 0 1 0 0 1 1 -1 -1 1 0 0 -1 -1 1 0 0 1 0 0 1 0 0 0 1 -1 0 0 -1 -1 0 1 1 -1 1 0 0 0 0 0 0 0 1 -1 1 0 -1 0 1 0 0 0 -1 0 -1 1 -1 0 0 0 1 1 -1 1 0 -1 -1 -1 0 1 -1 0 -1 0 -1 -1 -1 1 1 1 1} |
| $\vec{u}_{13}$ | {1 0 0 0 0 0 1 1 -1 0 -1 0 0 0 0 1 0 0 1 -1 -1 0 0 0 1 -1 0 1 0 0 1 0 0 1 0 1 1 1 0 -1 1 0 1 1 1 0 0 -1 -1 0 1 -1 0 1 -1 0 0 1 0 1 0 1 -1 0 1 0 1 -1 1 -1 -1 -1 0 -1 1 -1 -1 0 0 0 0 -1 1 0 0 0 1 0 0 0 1 0 -1 0 0 -1 1 0 0 1 1 1 -1 0 1 0 -1 0 -1 0 0 0 -1 1 1 1 -1 -1 -1 0 0 -1 0 0 0 0 0 0 -1 0 1} |
| $\vec{u}_{113}$ | {0 0 1 0 -1 1 0 0 0 -1 1 0 0 1 -1 0 1 1 0 1 0 0 0 1 -1 -1 1 -1 0 0 0 0 1 1 -1 0 0 0 0 1 0 1 0 0 1 1 0 0 0 0 0 0 0 1 1 0 -1 0 -1 -1 1 0 -1 0 0 1 0 -1 0 1 0 1 1 0 1 -1 -1 -1 0 0 1 0 0 0 0 1 0 0 0 1 0 0 -1 0 0 1 -1 1 1 0 -1 0 1 0 1 0 0 0 0 0 -1 0 -1 1 -1 1 0 0 -1 -1 -1 0 -1 - 1 -1 -1 1 1 1 0 1 -1} |
| $\vec{u}_{57}$ | {0 1 -1 1 1 0 0 0 0 0 0 -1 0 1 0 -1 -1 0 0 0 1 -1 -1 0 0 1 0 0 1 1 -1 1 1 1 1 1 -1 0 0 0 -1 0 -1 0 0 0 1 0 0 -1 1 0 1 1 0 0 0 -1 1 -1 0 0 -1 0 1 0 1 1 1 -1 0 -1 -1 0 1 0 1 1 0 0 1 0 -1 1 1 1 0 -1 1 1 1 0 1 -1 1 1 0 1 0 -1 0 0 0 0 0 1 0 0 -1 0 0 -1 -1 0 0 0 0 -1 0 -1 1 0 0 0 0 0 0 -1 0 1 -1 0} |
| $\vec{u}_{15}$ | {0 0 0 -1 1 0 0 1 -1 0 1 1 0 1 0 0 0 1 -1 -1 1 1 -1 -1 0 0 0 0 1 1 -1 0 0 0 1 0 1 0 1 0 0 1 1 0 0 0 0 0 0 1 1 0 -1 0 -1 -1 1 0 -1 0 0 1 0 -1 0 1 0 1 1 0 1 -1 -1 0 0 1 0 0 0 0 1 0 0 0 1 0 0 -1 0 0 1 -1 1 1 1 0 -1 0 1 0 1 0 0 0 0 0 -1 0 -1 1 -1 1 1 0 0 -1 -1 -1 0 -1 -1 -1 -1 1 1 1 1 0 1 -1 0 0 1 0 -1 1} |
| $\vec{u}_{114}$ | {1 1 -1 0 -1 -1 0 1 0 1 1 0 0 1 0 -1 1 1 1 0 -1 1 1 1 0 1 -1 1 0 1 0 -1 0 0 0 0 1 0 0 -1 0 0 -1 -1 0 0 0 0 -1 0 -1 1 0 0 0 0 0 -1 0 1 -1 0 0 1 -1 1 1 0 0 0 0 0 0 -1 0 1 0 -1 -1 0 0 0 1 -1 -1 0 0 1 0 0 1 0 0 1 1 -1 1 1 1 1 1 -1 0 0 0 -1 0 -1 0 0 0 1 0 0 -1 1 0 1 1 0 0 0 -1 1 -1 0 0 -1 0 1 0 1 0 1} |
| $\vec{u}_{77}$ | {0 0 1 0 1 -1 0 -1 1 0 0 1 0 1 0 -1 0 1 1 0 0 0 -1 0 0 0 0 0 1 0 0 1 1 -1 -1 1 0 0 -1 -1 1 0 0 1 0 0 1 0 0 0 1 -1 0 0 -1 -1 0 1 1 -1 1 1 -1 1 0 0 0 0 0 0 1 -1 1 0 -1 0 1 0 0 0 -1 0 -1 1 -1 0 0 1 1 -1 1 0 -1 -1 -1 0 1 -1 0 -1 0 -1 0 -1 -1 -1 -1 1 1 1 0 1 0 0 1 1 0 0 0 0 1 1 0 1 0 0 0 0 0 1 0 -1} |
| $\vec{u}_{104}$ | {0 -1 0 -1 0 0 0 -1 1 1 1 -1 -1 -1 1 0 0 -1 0 0 0 0 0 0 - 1 0 1 1 0 0 0 0 0 1 1 -1 0 -1 0 0 0 0 0 1 0 0 1 -1 -1 0 0 0 1 -1 0 1 0 0 1 0 0 1 0 1 0 1 1 1 0 -1 1 0 1 1 1 0 0 -1 -1 0 1 -1 0 0 1 0 1 0 1 -1 0 1 0 1 -1 1 -1 -1 0 -1 1 -1 -1 0 0 0 0 -1 1 0 0 0 1 0 0 0 0 1 0 -1 0 0 -1 1 0 0 1 1 1 -1 0 1} |
| $\vec{u}_{43}$ | {0 1 1 0 1 -1 0 1 0 -1 0 1 0 0 0 1 0 0 -1 0 0 1 1 0 0 1 -1 -1 1 0 0 0 -1 1 -1 0 -1 -1 -1 0 1 0 -1 1 -1 1 0 1 0 0 1 0 1 -1 0 0 1 0 -1 0 0 1 1 1 0 0 -1 0 0 0 1 1 0 0 0 1 0 1 0 1 1 1 0 0 0 0 -1 0 0 0 0 -1 1 0 1 0 0 0 0 0 0 1 -1 -1 1 -1 0 1 1 0 0 0 0 0 0 -1 0 1 0 -1 1 0 -1 -1 -1 -1 1 1 -1 -1 0 0} |
| $\vec{u}_{96}$ | {0 0 1 1 1 0 1 -1 0 0 0 1 0 1 0 0 1 0 1 0 1 1 -1 1 1 -1 0 -1 0 -1 0 -1 0 0 0 0 1 0 -1 1 0 1 -1 1 1 1 0 0 1 -1 -1 0 0 1 0 1 -0 1 1 0 0 -1 1 0 0 0 0 0 1 -1 0 -1 1 0 -1 0 1 -1 1 1 0 -1 0 0 0 -1 -1 0 0 -1 0 0 0 -1 0 0 0 0 0 0 1 0 0 1 0 0 1 -1 0 1 0 0 1 1 -1 -1 0 1 1 1 1 0 0 0 0 1 1 1 -1 -1 -1 -1 0} |

The foregoing content describes in detail the method provided in this application. To facilitate implementation of the foregoing solutions in embodiments of this application, embodiments of this application further provide a corresponding apparatus or device.

In this application, the communication apparatus is divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in this application, division into the modules is an example and is merely logical function division. In actual implementation, another division manner may be used. The following describes in detail communication apparatuses in embodiments of this application with reference to FIG. 7 to FIG. 9.

FIG. 7 is a diagram of a structure of a communication apparatus according to an embodiment of this application. As shown in FIG. 7, the communication apparatus includes a transceiver unit 10 and a processing unit 20.

In some embodiments of this application, the communication apparatus may be the first communication apparatus shown above or a chip in the first communication apparatus. To be specific, the communication apparatus shown in FIG. 7 may be configured to perform the steps, the functions, or the like performed by the first communication apparatus in the foregoing method embodiment.

For example, the processing unit 20 is configured to generate a PPDU. The PPDU includes a first sequence. A periodic autocorrelation main lobe amplitude of the first sequence is not zero and a periodic autocorrelation side lobe amplitude of the first sequence is zero. A periodic cross-correlation function of the first sequence and a second sequence has a maximum of three different values, and the first sequence and the second sequence belong to a same sequence pair. The transceiver unit 10 is configured to send the PPDU.

In a possible implementation, the transceiver unit 10 is further configured to receive sequence configuration information. The sequence configuration information includes sequence index information, and the sequence index information corresponds to the first sequence or is used to determine the first sequence.

For specific descriptions of the PPDU, the first sequence, the second sequence, the sequence configuration information, and the like, refer to the foregoing method embodiment. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiment. Details are not described herein again. For example, the transceiver unit 10 may be configured to perform step S102 shown in FIG. 6, and the processing unit 20 may be configured to perform step S101 shown in FIG. 6.

Still refer to FIG. 7. In some other embodiments of this application, the communication apparatus may be the second communication apparatus shown above or a chip in the second communication apparatus. To be specific, the communication apparatus shown in FIG. 7 may be configured to perform the steps, the functions, or the like performed by the second communication apparatus in the foregoing method embodiment.

For example, the transceiver unit 10 is configured to receive a PPDU. The PPDU includes a first sequence. A periodic autocorrelation main lobe amplitude of the first sequence is not zero and a periodic autocorrelation side lobe amplitude of the first sequence is zero. A periodic cross-correlation function of the first sequence and a second sequence has a maximum of three different values, and the first sequence and the second sequence belong to a same sequence pair. The processing unit 20 is configured to process the PPDU.

In a possible implementation, the transceiver unit 10 is further configured to send or receive sequence configuration information. The sequence configuration information includes sequence index information, and the sequence index information corresponds to the first sequence or is used to determine the first sequence.

For specific descriptions of the PPDU, the first sequence, the second sequence, the sequence configuration information, and the like, refer to the foregoing method embodiment. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method embodiment. Details are not described herein again. For example, the transceiver unit 10 may be configured to receive the PPDU, and the processing unit 20 may be configured to perform step S103 shown in FIG. 6.

The foregoing describes the communication apparatus in embodiments of this application. The following describes a possible product form of the communication apparatus. It should be understood that a product in any form that has a function of the communication apparatus in FIG. 7 falls within the protection scope of embodiments of this application. It should be further understood that the following descriptions are merely examples, and a product form of the communication apparatus in embodiments of this application is not limited thereto.

In a possible implementation, in the communication apparatus shown in FIG. 7, the processing unit 20 may be one or more processors. The transceiver unit 10 may be a transceiver, or the transceiver unit 10 may be a sending unit and a receiving unit. The sending unit may be a transmitter, and the receiving unit may be a receiver. The sending unit and the receiving unit are integrated into one component, for example, a transceiver. In embodiments of this application, the processor and the transceiver may be coupled, or the like. A manner of connection between the processor and the transceiver is not limited in embodiments of this application. In a process of performing the foregoing method, a process of sending information (for example, sending a PPDU) in the foregoing method may be understood as a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information (for example, receiving a PPDU) in the foregoing method may be understood as a process of receiving the input information by the processor. When the processor receives the input information, the transceiver receives the information, and inputs the information into the processor. Further, after the transceiver receives the foregoing information, other processing may need to be performed on the foregoing information before the information is input into the processor.

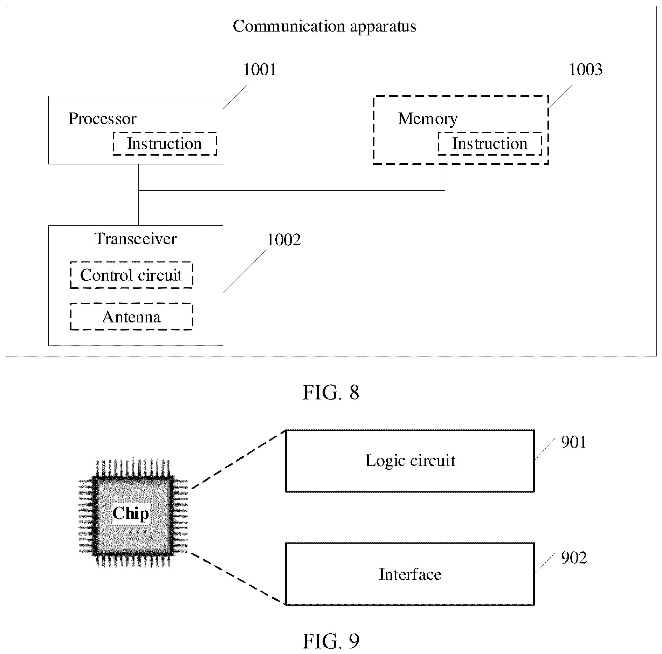

FIG. 8 is a diagram of another structure of a communication apparatus according to an embodiment of this application. The communication apparatus may be a first communication apparatus, a second communication apparatus, or a chip in the first communication apparatus or the second communication apparatus. FIG. 8 shows only main components of the communication apparatus. In addition to a processor 1001 and a transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to perform conversion between a baseband signal and a radio frequency signal, and process the radio frequency signal. The antenna is mainly configured to send and receive a radio frequency signal in a form of an electromagnetic wave. The input/output apparatus, such as a touchscreen, a display, or a keyboard, is mainly configured to receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to a radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independently of the processor for baseband processing. For example, in a distributed scenario, the radio frequency circuit and the antenna may be disposed remotely and independently of the communication apparatus.

The processor 1001, the transceiver 1002, and the memory 1003 may be connected through a communication bus.

For example, when the communication apparatus is configured to perform the steps, methods, or functions performed by the first communication apparatus in the foregoing method embodiment, the processor 1001 may be configured to perform step S101 in FIG. 6, and/or configured to perform another process of the technology described in this specification; and the transceiver 1002 may be configured to perform step S102 in FIG. 6, and/or configured to perform another process of the technology described in this specification.

For example, when the communication apparatus is configured to perform the steps, methods, or functions performed by the second communication apparatus in the foregoing method embodiment, the processor 1001 may be configured to perform step S103 in FIG. 6, and/or configured to perform another process of the technology described in this specification; and the transceiver 1002 may be configured to receive a processed PPDU in step S103 in FIG. 6, and/or configured to perform another process of the technology described in this specification.

In an implementation, the processor 1001 may store instructions. The instructions may be a computer program. The computer program is run on the processor 1001, so that the communication apparatus performs the method described in the method embodiment. The computer program may be solidified in the processor 1001. In this case, the processor 1001 may be implemented by hardware.

In an implementation, the communication apparatus may include a circuit. The circuit may implement the sending, receiving, or communication function in the foregoing method embodiment. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-type metal-oxide-semiconductor (N-type metal-oxide-semiconductor, NMOS), a P-channel metal-oxide-semiconductor (positive-channel metal-oxide-semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may further include more components than those in FIG. 8, and the like. This is not limited in this embodiment of this application. The foregoing method performed by the processor and the transceiver is merely an example. For specific steps performed by the processor and the transceiver, refer to descriptions in the foregoing method embodiment.

In another possible implementation, in the communication apparatus shown in FIG. 7, the processing unit 20 may be one or more logic circuits, and the transceiver unit 10 may be an input/output interface, or also referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 9 is a diagram of another structure of a communication apparatus according to an embodiment of this application. As shown in FIG. 9, the communication apparatus shown in FIG. 9 includes a logic circuit 901 and an interface 902. That is, the processing unit 20 may be implemented by using the logic circuit 901, and the transceiver unit 10 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 9 shows an example in which the communication apparatus is a chip, and the chip includes the logic circuit 901 and the interface 902.

In this embodiment of this application, the logic circuit and the interface may be further coupled to each other. A specific manner of connection between the logic circuit and the interface is not limited in embodiments of this application.

For example, when the communication apparatus is configured to perform the steps, methods, or functions performed by the first communication apparatus in the foregoing method embodiment, the logic circuit 901 is configured to generate a PPDU. The PPDU includes a first sequence. A periodic autocorrelation main lobe amplitude of the first sequence is not zero and a periodic autocorrelation side lobe amplitude of the first sequence is zero. A periodic cross-correlation function of the first sequence and a second sequence has a maximum of three different values, and the first sequence and the second sequence belong to a same sequence pair. The interface 902 is configured to output the PPDU.

For example, when the communication apparatus is configured to perform the steps, methods, or functions performed by the second communication apparatus in the foregoing method embodiment, the interface 902 is configured to input a PPDU. The PPDU includes a first sequence. A periodic autocorrelation main lobe amplitude of the first sequence is not zero and a periodic autocorrelation side lobe amplitude of the first sequence is zero. A periodic cross-correlation function of the first sequence and a second sequence has a maximum of three different values, and the first sequence and the second sequence belong to a same sequence pair. The logic circuit 901 is configured to process the PPDU.

It may be understood that for specific descriptions of the PPDU, the first sequence, the second sequence, and the like, refer to the foregoing method embodiment. Details are not described herein again.

It may be understood that the communication apparatus described in embodiments of this application may implement the method provided in embodiments of this application in a form of hardware, or may implement the method provided in embodiments of this application in a form of software. This is not limited in embodiments of this application.

For specific implementations of the embodiment shown in FIG. 9, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments.

In addition, this application further provides a computer program. The computer program is used to implement operations and/or processing performed by the first communication apparatus in the method provided in this application.

This application further provides a computer program. The computer program is used to implement operations and/or processing performed by the second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the method provided in this application.

This application further provides a computer-readable storage medium. The computer-readable storage medium stores computer code. When the computer code is run on a computer, the computer is enabled to perform operations and/or processing performed by the second communication apparatus in the method provided in this application.

This application further provides a computer program product. The computer program product includes computer code or a computer program. When the computer code or the computer program is run on a computer, operations and/or processing performed by the first communication apparatus in the method provided in this application are/is performed.

This application further provides a computer program product. The computer program product includes computer code or a computer program. When the computer code or the computer program is run on a computer, operations and/or processing performed by the second communication apparatus in the method provided in this application are/is performed.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be indirect couplings or communication connections by using some interfaces, apparatuses, or units, and may also be connection in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a readable storage medium and includes several instructions for instructing a computer device (which may be a personal computer, a server, or a network device) to perform all or some of the steps of the method described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An ultra-wideband-based physical layer protocol data unit PPDU transmission method, comprising:

   generating, by a communication apparatus, a physical layer protocol data unit PPDU, wherein the PPDU comprises a first sequence, a periodic autocorrelation main lobe amplitude of the first sequence is not zero and a periodic autocorrelation side lobe amplitude of the first sequence is zero, a periodic cross-correlation function of the first sequence and a second sequence has a maximum of three different values, and the first sequence and the second sequence belong to a same sequence pair; and
   sending, by the communication apparatus, the PPDU.

2. An ultra-wideband-based physical layer protocol data unit PPDU transmission method, comprising:

   receiving, by a communication apparatus, a physical layer protocol data unit PPDU, wherein the PPDU comprises a first sequence, a periodic autocorrelation main lobe amplitude of the first sequence is not zero and a periodic autocorrelation side lobe amplitude of the first sequence is zero, a periodic cross-correlation function of the first sequence and a second sequence has a maximum of three different values, and the first sequence and the second sequence belong to a same sequence pair; and
   processing, by the communication apparatus, the PPDU.

3. The method according to claim 1 or 2, wherein lengths of the first sequence and the second sequence are both N, and the periodic cross-correlation function of the first sequence and the second sequence comprises one or more of the following values:

$0$; $2^{(n-f)/2}$; and $-2^{(n-f)/2}$, wherein

$f=2\times e$-$gcd(n, 3k)$, $e=gcd(n, k)$, a quotient of dividing n by e is an odd number, $gcd(n, k)$ represents a greatest common divisor of n and k, $gcd(n, 3k)$ represents a greatest common divisor of n and 3k, k is a positive integer, and n satisfies $2^n=N+1$.

4. The method according to any one of claims 1 to 3, wherein the length of the first sequence is 511 bits, and the first sequence is any sequence in Table 1; or
the length of the first sequence is 127 bits, and the first sequence is any sequence in Table 2.

5. The method according to any one of claims 1 to 4, wherein the first sequence is generated based on a $d_1$-times decimated sequence of an m-sequence, and the second sequence is generated based on a $d_2$-times decimated sequence of the m-sequence, wherein $d_1=(2^k+1)^{-1}$ and $d_2=2^{2k}-2^k+1$, and $d_1$ satisfies $d_1\times d_{1-1}=d_1\times(2^k+1)=1(mod\,N)$; or $d_1=(2^k+1)$ and $d_2=(2^{2k}-2^{1k}+1)^{-1}$, and $d_2$ satisfies $d_2\times d_{2-1}=d_2\times(2^{2k}-2^k+1)=1(mod\,N)$, wherein k is a positive integer, and N is a length of the m-sequence.

6. The method according to any one of claims 1 to 5, wherein the first sequence is carried in one or more of the following fields of the PPDU: a synchronization field, a wake-up field, a sensing field, or a ranging field.

7. The method according to any one of claims 1 to 6, wherein a periodic autocorrelation main lobe amplitude of the second sequence is not zero and a periodic autocorrelation side lobe amplitude of the second sequence is zero.

8. The method according to claim 1, wherein the method further comprises:
receiving, by the communication apparatus, sequence configuration information, wherein the sequence configuration information comprises sequence index information, and the sequence index information corresponds to the first sequence.

9. The method according to claim 2, wherein the method further comprises:
sending or receiving, by the communication apparatus, sequence configuration information, wherein the sequence configuration information comprises sequence index information, and the sequence index information corresponds to the first sequence.

10. A communication apparatus, comprising:

a processing unit, configured to generate a physical layer protocol data unit PPDU, wherein the PPDU comprises a first sequence, a periodic autocorrelation main lobe amplitude of the first sequence is not zero and a periodic autocorrelation side lobe amplitude of the first sequence is zero, a periodic cross-correlation function of the first sequence and a second sequence has a maximum of three different values, and the first sequence and the second sequence belong to a same sequence pair; and
a transceiver unit, configured to send the PPDU.

11. The apparatus according to claim 10, wherein the transceiver unit is further configured to:
receive sequence configuration information, wherein the sequence configuration information comprises sequence index information, and the sequence index information corresponds to the first sequence.

12. A communication apparatus, comprising:

a transceiver unit, configured to receive a physical layer protocol data unit PPDU, wherein the PPDU comprises a first sequence, a periodic autocorrelation main lobe amplitude of the first sequence is not zero and a periodic autocorrelation side lobe amplitude of the first sequence is zero, a periodic cross-correlation function of the first sequence and a second sequence has a maximum of three different values, and the first sequence and the second sequence belong to a same sequence pair; and
a processing unit, configured to process the PPDU.

13. The apparatus according to claim 12, wherein the transceiver unit is further configured to:
send or receive sequence configuration information, wherein the sequence configuration information comprises sequence index information, and the sequence index information corresponds to the first sequence.

14. The apparatus according to any one of claims 10 to 13, wherein lengths of the first sequence and the second sequence are both N, and the periodic cross-correlation function of the first sequence and the second sequence comprises one or more of the following values:

0; $2^{(n-f)/2}$; and $-2^{(n-f)/2}$, wherein

$f=2\times e$-gcd(n, 3k), e=gcd(n, k), a quotient of dividing n by e is an odd number, gcd(n, k) represents a greatest common divisor of n and k, gcd(n, 3k) represents a greatest common divisor of n and 3k, k is a positive integer, and n satisfies $2^n=N+1$.

15. The apparatus according to any one of claims 10 to 14, wherein the length of the first sequence is 511 bits, and the first sequence is any sequence in Table 1; or
the length of the first sequence is 127 bits, and the first sequence is any sequence in Table 2.

16. The apparatus according to any one of claims 10 to 15, wherein the first sequence is generated based on a $d_1$-times decimated sequence of an m-sequence, and the second sequence is generated based on a $d_2$-times decimated sequence of the m-sequence, wherein $d_1=(2^k+1)^{-1}$ and $d_2=2^{2k}-2^k+1$, and $d_1$ satisfies $d_1 \times d_1^{-1}=d_1\times(2^k+1)=1(mod\ N)$; or $d_1=(2^k+1)$ and $d_2=(2^{2k}-2^k+1)^{-1}$, and $d_2$ satisfies $d_2\times d_2^{-1}=d_2\times(2^{2k}-2^k+1)=1(mod\ N)$, wherein k is a positive integer, and N is a length of the m-sequence.

17. The apparatus according to any one of claims 10 to 16, wherein the first sequence is carried in one or more of the following fields of the PPDU: a synchronization field, a wake-up field, a sensing field, or a ranging field.

18. The apparatus according to any one of claims 10 to 17, wherein a periodic autocorrelation main lobe amplitude of the second sequence is not zero and a periodic autocorrelation side lobe amplitude of the second sequence is zero.

19. A communication apparatus, comprising a processor and a memory, wherein

the memory is configured to store instructions; and
the processor is configured to execute the instructions, to perform the method according to any one of claims 1 to 9.

20. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 9 is performed.

21. A wireless communication system, comprising the communication apparatus according to claim 10 or 11, and the communication apparatus according to claim 12 or 13.

22. A computer-readable storage medium, wherein the computer-readable storage medium is configured to store a computer program, and when the computer program is executed, the method according to any one of claims 1 to 9 is performed.

Full function device

Reduced function device

FIG. 1

Full function device

Reduced function device

FIG. 2

| Synchronization header SHR | Physical layer header PHR | Physical payload field PHY payload field |
|---|---|---|

FIG. 3

FIG. 4

FIG. 5

```
┌─────────────┐                              ┌─────────────┐
│    First    │                              │   Second    │
│communication│                              │communication│
│  apparatus  │                              │  apparatus  │
└──────┬──────┘                              └──────┬──────┘
```

S101: Generate a PPDU, where the PPDU includes a first sequence, a periodic autocorrelation main lobe amplitude of the first sequence is not zero and a periodic autocorrelation side lobe amplitude of the first sequence is zero, a periodic cross-correlation function of the first sequence and a second sequence has a maximum of three different values, and the first sequence and the second sequence belong to a same sequence pair

S102: Send the PPDU

S103: Process the PPDU

FIG. 6

```
┌─────────────────────────────────┐
│   ┌──────────────────┐  ╱ 10     │
│   │ Transceiver unit │ ╱         │
│   └────────┬─────────┘           │
│            │                     │
│   ┌────────┴─────────┐  ╱ 20     │
│   │ Processing unit  │ ╱         │
│   └──────────────────┘           │
│   Communication apparatus        │
└─────────────────────────────────┘
```

FIG. 7

Communication apparatus

1001                                                                          1003

Processor
Instruction

Memory
Instruction

Transceiver                         1002
Control circuit

Antenna

FIG. 8

Logic circuit                901

Chip

Interface                     902

FIG. 9

## INTERNATIONAL SEARCH REPORT

| International application No. |
|---|
| **PCT/CN2024/080811** |

| A. | CLASSIFICATION OF SUBJECT MATTER |
|---|---|

G01S13/06(2006.01)i; H04B1/711(2011.01)i

According to International Patent Classification (IPC) or to both national classification and IPC

| B. | FIELDS SEARCHED |
|---|---|

Minimum documentation searched (classification system followed by classification symbols)

IPC: G01S, H04B

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, IEEE, 3GPP: 超宽带, UWB, PPDU, 干扰, 函数, 互相关, 自相关, 旁瓣, 完备, 完美, 序列, interference, perfect, sequence, cross-correlation

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | WO 2023236805 A1 (HUAWEI TECHNOLOGIES CO., LTD.) 14 December 2023 (2023-12-14) description, page 11, paragraph 1-page 36, paragraph 1 | 1-21 |
| X | WO 2023025111 A1 (HUAWEI TECHNOLOGIES CO., LTD.) 02 March 2023 (2023-03-02) description, page 5, paragraph 2-page 31, paragraph 2, and figure 4 | 1-21 |
| X | CN 114916009 A (HUAWEI TECHNOLOGIES CO., LTD.) 16 August 2022 (2022-08-16) description, paragraphs [0115]-[0345], and figure 7 | 1-21 |
| A | CN 105284078 A (HUAWEI TECHNOLOGIES CO., LTD.) 27 January 2016 (2016-01-27) entire document | 1-21 |
| A | US 2019273636 A1 (APPLE INC.) 05 September 2019 (2019-09-05) entire document | 1-21 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 June 2024** | **04 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/080811**

| Patent document cited in search report | | | Publication date (day/month/year) | Patent family member(s) | | | Publication date (day/month/year) |
|---|---|---|---|---|---|---|---|
| WO | 2023236805 | A1 | 14 December 2023 | TW | 202404292 | A | 16 January 2024 |
| WO | 2023025111 | A1 | 02 March 2023 | None | | | |
| CN | 114916009 | A | 16 August 2022 | WO | 2022171021 | A1 | 18 August 2022 |
| | | | | CA | 3210915 | A1 | 09 August 2023 |
| | | | | AU | 2022220522 | A1 | 31 August 2023 |
| | | | | BR | 112023016027 | A2 | 05 September 2023 |
| | | | | WO | 2022171021 | A9 | 28 September 2023 |
| | | | | KR | 20230144579 | A | 16 October 2023 |
| | | | | WO | 2022171021 | A8 | 02 November 2023 |
| | | | | EP | 4284060 | A1 | 29 November 2023 |
| | | | | IN | 202317056304 | A | 08 December 2023 |
| | | | | US | 2024031050 | A1 | 25 January 2024 |
| | | | | VN | 100539 | A | 25 January 2024 |
| | | | | JP | 2024506652 | W | 14 February 2024 |
| CN | 105284078 | A | 27 January 2016 | US | 2016080127 | A1 | 17 March 2016 |
| | | | | US | 9917678 | B2 | 13 March 2018 |
| | | | | WO | 2014205743 | A1 | 31 December 2014 |
| US | 2019273636 | A1 | 05 September 2019 | US | 10924303 | B2 | 16 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310260811